# EUROPÄISCHE PATENTSCHRIFT

(11) **EP 3 426 962 B1**
(45) Veröffentlichungstag und Bekanntmachung des Hinweises auf die Patenterteilung: **06.05.2020**
(21) Anmeldenummer: 17710209.2
(22) Anmeldetag: 09.03.2017
(51) Int. Cl.: F16L 37/56, H01R 13/00, F16L 25/01, F16L 53/38

(54) **GEFÜHRTE STECKVERBINDUNG**
GUIDED PLUG CONNECTION
ASSEMBLAGE PAR EMBOÎTEMENT GUIDÉ

(30) Priorität: 10.03.2016 DE 102016104437; 13.09.2016 DE 102016117219
(43) Veröffentlichungstag der Anmeldung: 16.01.2019
(73) Patentinhaber: Voss Automotive GmbH, 51688 Wipperfürth (DE)
(72) Erfinder: BIRKHOLZ, Thomas, 51645 Gummersbach (DE); HESS, Jochem-Andreas, 51688 Wipperfürth (DE); ETSCHEID, Tobias, 51789 Lindlar (DE); ROSENFELDT, Sascha, 51688 Wipperfürth (DE); BOXBERG, Dietmar, 51515 Köln (DE)
(74) Vertreter: Patent- und Rechtsanwälte Dr. Solf & Zapf
(86) Internationale Anmeldenummer: PCT/EP2017/055599
(87) Internationale Veröffentlichungsnummer: WO 2017/153545

(56) Entgegenhaltungen:
- EP-A1- 2 463 566
- EP-A2- 0 821 444
- EP-A2- 1 538 708

## Beschreibung

### "Geführte Steckverbindung"

Die Erfindung betrifft einen Mehrfachsteckverbinder zum Verbinden von zwei beheizten Fluidleitungen und zumindest zwei Elektroleitungen über einen einzigen Steckvorgang, aufweisend ein weibliches Steckerteil, das mit einem männlichen Steckerteil entlang einer Steckachse lösbar in einem zusammengesteckten Zustand der Steckerteile verbunden ist, wobei jedes Steckerteil einen Fluidanschluss und zwei Elektroanschlüsse aufweist.

Aus der EP 0 821 444 A2 ist ein Mehrfachsteckverbinder zum Verbinden von zwei Fluidleitungen und zumindest zwei Elektroleitungen über einen einzigen Steckvorgang bekannt. Hierbei weist dieser Steckverbinder ein weibliches Steckerteil auf, das mit einem männlichen Steckerteil entlang einer Steckachse lösbar in einem zusammengesteckten Zustand der Steckerteile verbunden ist. Jedes Steckerteil besitzt einen Fluidanschluss und zwei Elektroanschlüsse, wobei jedes Steckerteil ein zweiteiliges Steckergehäuse aus einem Bodenteil und einem Deckelteil aufweist, die miteinander verbindbar sind und einen Innenraum umschließen. Weiterhin weist der Mehrfachsteckverbinder an jedem Steckerteil eine Zugentlastungsschelle auf, die zur Aufnahme von Elektroleitungen dient. Die Zugentlastungsschelle, die brillenartig ausgebildet ist, ist mit dem jeweiligen Steckergehäuse an dessen Außenseite rastend verbunden. Dieser Mehrfachsteckverbinder und eine daraus erstellte Geräte-Steckvorrichtung dient insbesondere als Lade-Steckvorrichtung für Batterien oder Elektroförderfahrzeuge, wie Gabelstapler, oder auch für andere Elektrofahrzeuge oder Elektroantriebe.

Der Erfindung liegt die Aufgabe zugrunde, einen Mehrfachsteckverbinder der eingangs genannten Art zur Verfügung zu stellen, der bei einer durch Temperaturschwankungen bedingten Fluiddruckerhöhung, insbesondere unter dem Einfluss von Eisdruck, weiterhin funktionsfähig ist.

Diese Aufgabe wird durch die Merkmale des Anspruchs 1 gelöst.

Die separate Ausbildung und Montage des Fluidverbinders hat den Vorteil, dass der Steckverbinder im zusammengesteckten Zustand einen größeren Fluiddruck bzw. Eisdruck aufnehmen kann als ein Steckverbinder der aus weniger Einzelteilen montiert ist.

Vorzugsweise ist das Brillenteil im Bereich der Elektroanschlüsse formschlüssig an dem Bodenteil und/oder an dem Deckelteil gegen Verschiebungen längs der Steckachse gesichert. Es besteht insbesondere ein Vorteil darin, wenn die Elektroanschlüsse und der Fluidanschluss je Steckerteil separat voneinander ausgebildet sind, denn es wird hierdurch weniger in den Fluidanschlüssen durch Fluiddruck erzeugte Kraft über den Steckverbinder an die Elektroanschlüsse weitergeleitet.

Vorzugsweise besitzt eines der Steckerteile einen sich umfangsgemäß axial zu der Steckachse über den Fluidanschluss und die Elektroanschlüsse erstreckenden Kragen. Mittels des Kragens ist das andere Steckerteil in das den Kragen aufweisende Steckerteil über einen vorgegebenen Verkippungswinkel von maximal 8°, insbesondere von maximal 4°, zur Steckachse einführbar. Dies erhöht die Schiefstecksicherheit, insbesondere der Elektroanschlüsse.

Insbesondere ist vorgesehen, dass das Fenster an der elektrischen Kontaktbuchse und der elektrische Kontaktstift derart zueinander angeordnet sind, dass eine Schiefstecksicherheit der elektrischen Kontakte trotz konstruktionsbedingt schiefer Ausrichtung der elektrischen Kontaktstifte zu den elektrischen Kontaktbuchsen in einem Bereich von 4° bis 8° bezüglich der Steckachse X gewährleistet ist.

Besonders bevorzugt ist vorgesehen, dass beim Überführen der Steckerteile in den zusammengesteckten Zustand bei einem Abstand der beiden Steckerteile, bei dem der Kragen des weiblichen Steckerteils die Elektroanschlüsse des männlichen Steckerteils aufnimmt, jedes Fenster einer elektrischen Kontaktbuchse eines weiblichen Elektroanschlusses auf einem zylindrischen Umfangsmantel einer mittig durch die elektrische Kontaktbuchse des weiblichen Elektroanschlusses verlaufenden Mittelachse, insbesondere um 180°, radial versetzt zu einem in die elektrische Kontaktbuchse einzuführenden elektrischen Kontaktstift des männlichen Steckerteils angeordnet ist. Besonders bevorzugt ist bei der zuvor beschriebenen Anordnung der Steckerteile zum Überführen in den zusammengesteckten Zustand jedes Fenster der elektrischen Kontaktbuchse auf einem zylindrischen Umfangsmantel einer mittig durch eine Einlassöffnung der elektrischen Kontaktbuchse verlaufenden Mittelachse, insbesondere um 180°, radial versetzt zu dem in die elektrische Kontaktbuchse einzuführenden elektrischen Kontaktstift angeordnet. Hierbei zeigen die elektrischen Kontaktstifte der männlichen Elektroanschlüsse bereits beim Überführen der Steckerteile in den zusammengesteckten Zustand quer zur Steckachse von dem jeweiligen Fenster weg, das direkt neben der Einlassöffnung der elektrischen Kontaktbuchse angeordnet ist. Dies hat den Vorteil, dass die elektrischen Kontaktstifte nicht in das Fenster neben der elektrischen Kontaktbuchse eingesteckt werden können. Sofern die elektrischen Kontaktstifte konstruktionsbedingt 4° bis 8° schief zur Steckachse ausgerichtet sein sollten, kann infolgedessen trotzdem gewährleistet werden, dass die Spitzen der elektrischen Kontaktstifte immer von den Fenstern der elektrischen Kontaktbuchsen wegzeigen, und zwar zumindest auf dem Umfangsmantel der Mittelachse der elektrischen Kontaktbuchse um 180° versetzt zu den Fenstern. Besonders bevorzugt ist zusätzlich der Kragen am weiblichen Steckerteil ausgebildet, so dass die elektrischen Kontaktstifte beim Zusammenführen der Steckerteile keinesfalls in die Fenster der elektrischen Kontaktbuchsen eintreten können. Zusammenfassend wird hierdurch eine Schiefstecksicherheit der elektrischen Kontakte gewährleistet.

Vorzugsweise ist der weibliche Elektroanschluss an seinem Außenumfang von einem Dichtelement, insbesondere von einem tonnenförmigen Dichtring, umfasst, wobei das Dichtelement kraftschlüssig und/oder formschlüssig an dem Außenumfang des weiblichen Elektroanschlusses befestigt ist. Insbesondere ist vorgesehen, dass das Dichtelement längs der Steckachse eine derartige axiale Breite aufweist, dass es bei einer Anlage an dem bundförmigen Vorsprung axial zur Steckachse über die elektrische Kontaktbuchse des weiblichen Elektroanschlusses übersteht und das Dichtelement im zusammengesteckten Zustand der Steckerteile mit einer längs der Steckachse wirkenden axialen Spannkraft an dem bundförmigen Vorsprung des weiblichen Elektroanschlusses und an dem jeweiligen männlichen Elektroanschluss anliegt. Hierdurch wird ein Spiel zwischen den beiden Steckerteilen im zusammengesteckten Zustand unterbunden. Dadurch besteht der Vorteil, dass die elektrischen Kontakte der Elektroanschlüsse im zusammengesteckten Zustand nicht aneinander reiben können und somit das Überspringen von Funken zwischen den elektrischen Kontakten vermieden wird.

Das Dichtelement weist bevorzugt an seiner Außenwand einen ringförmigen Ringansatz auf, welcher das Dichtelement vollumfänglich bezüglich der Steckachse umschließt, wobei der Ringansatz derart ausgestaltet ist, dass er einen radialen Spalt zwischen dem Brillenteil und dem Dichtelement überbrückt. Diese bevorzugte Ausbildung hat den Vorteil, dass das Dichtelement auch ohne axiale Vorspannung abdichtet, indem dieses Dichtelement radial abdichtet. Weiterhin werden Relativbewegungen zwischen den elektrischen Kontakten, zum Beispiel verursacht durch Vibrationen, vermieden.

Vorteilhafte Ausführungsformen der Erfindung werden in der Beschreibung erläutert bzw. in den Zeichnungen dargestellt.

Es zeigen:
- Fig. 1a: eine Explosionsansicht eines erfindungsgemäßen ersten Brillenteils,
- Fig. 1b: eine Draufsicht auf das erfindungsgemäße erste Brillenteil,
- Fig. 1c: eine Draufsicht auf weibliche Elektroanschlüsse von Elektroleitungen an Führungskanälen von den Elektroleitungen des erfindungsgemäßen ersten Brillenteils,
- Fig. 1d: eine Draufsicht auf Einführöffnungen der Führungskanäle der Elektroleitungen des erfindungsgemäßen ersten Brillenteils,
- Fig. 1e: eine Seitenansicht auf das erfindungsgemäße erste Brillenteil,
- Fig. 1f: ein Querschnitt durch einen Führungskanal des erfindungsgemäßen ersten Brillenteils durch eine Achse C-C,
- Fig. 2a: eine Explosionsansicht eines erfindungsgemäßen zweiten Brillenteils,
- Fig. 2b: eine Draufsicht auf männliche Elektroanschlüsse der Elektroleitungen an den Führungskanälen von den Elektroleitungen des erfindungsgemäßen zweiten Brillenteils,
- Fig. 2c: eine Draufsicht auf das erfindungsgemäße zweite Brillenteil,
- Fig. 2d: eine Draufsicht auf Einführöffnungen der Führungskanäle der Elektroleitungen des zweiten erfindungsgemäßen Brillenteils,
- Fig. 3a: eine Seitenansicht auf ein erfindungsgemäßes Bodenteil für ein weibliches Steckerteil,
- Fig. 3b: eine Draufsicht auf Ausnehmungen des erfindungsgemäßen Bodenteils für ein weibliches Steckerteil,
- Fig. 3c: eine Draufsicht auf das erfindungsgemäße Bodenteil für ein weibliches Steckerteil,
- Fig. 3d: eine Draufsicht auf eine Durchführöffnung des erfindungsgemäßen Bodenteils für ein weibliches Steckerteil,
- Fig. 3e: ein Querschnitt durch eine Querschnittsachse F-F durch das erfindungsgemäße Bodenteil für ein weibliches Steckerteil,
- Fig. 4a: eine Seitenansicht auf ein erfindungsgemäßes Deckelteil für ein weibliches Steckerteil,
- Fig. 4b: eine Draufsicht auf Ausnehmungen des erfindungsgemäßen Deckelteils für ein weibliches Steckerteil,
- Fig. 4c: eine Draufsicht auf das erfindungsgemäße Deckelteil für ein weibliches Steckerteil,
- Fig. 4d: eine Draufsicht auf eine Durchführöffnung des erfindungsgemäßen Deckelteils für ein weibliches Steckerteil,
- Fig. 4e: ein Querschnitt durch eine Querschnittsachse G-G durch das erfindungsgemäße Deckelteil für ein weibliches Steckerteil,
- Fig. 5: eine Explosionsansicht eines erfindungsgemäßen Mehrfachverbinders aus einer ersten Perspektive,
- Fig. 6: eine Explosionsansicht eines erfindungsgemäßen Mehrfachverbinders aus einer zweiten Perspektive,
- Fig. 7a: eine Explosionsansicht einer ersten Ausführungsform einer tonnenförmigen Dichtung,
- Fig. 7b: eine Draufsicht auf die erste Ausführungsform der tonnenförmigen Dichtung,
- Fig. 7c: ein Querschnitt durch die tonnenförmige Dichtung gemäß der ersten Ausführungsform durch die Querschnittsachse J-J,
- Fig. 7d: eine Explosionsansicht einer zweiten Ausführungsform einer tonnenförmigen Dichtung,
- Fig. 7e: eine Draufsicht auf die zweite Ausführungsform der tonnenförmigen Dichtung,
- Fig. 7f: ein Querschnitt durch die tonnenförmige Dichtung gemäß der zweiten Ausführungsform durch die Querschnittsachse K-K,
- Fig. 7g: eine Explosionsansicht einer dritten Ausführungsform einer tonnenförmigen Dichtung,
- Fig. 7h: eine Draufsicht auf die dritte Ausführungsform der tonnenförmigen Dichtung,
- Fig. 7i: ein Querschnitt durch die tonnenförmige Dichtung gemäß der dritten Ausführungsform durch die Querschnittsachse L-L,
- Fig. 8a: eine erste Ansicht eines erfindungsgemäßen weiblichen Fluidverbinders,
- Fig. 8b: eine zweite Ansicht des erfindungsgemäßen weiblichen Fluidverbinders,
- Fig. 8c: eine Draufsicht auf einen Aufnahmebereich des weiblichen Fluidverbinders,
- Fig. 8d: eine Draufsicht auf eine Anschlussöffnung des weiblichen Fluidverbinders,
- Fig. 8e: eine dritte Ansicht des erfindungsgemäßen weiblichen Fluidverbinders,
- Fig. 8f: ein Querschnitt durch den weiblichen Fluidverbinder durch die Querschnittsachse A-A,
- Fig. 8g: eine Explosionsansicht des weiblichen Fluidverbinders,
- Fig. 9a: eine erste Ansicht eines erfindungsgemäßen männlichen Fluidverbinders,
- Fig. 9b: eine zweite Ansicht des erfindungsgemäßen männlichen Fluidverbinders,
- Fig. 9c: eine Draufsicht auf einen Steckbereich des männlichen Fluidverbinders,
- Fig. 9d: eine Draufsicht auf eine Anschlussöffnung des männlichen Fluidverbinders,
- Fig. 9e: eine dritte Ansicht des erfindungsgemäßen männlichen Fluidverbinders,
- Fig. 9f: ein Querschnitt durch den männlichen Fluidverbinder durch die Querschnittsachse B-B,
- Fig. 9g: eine Explosionsansicht des männlichen Fluidverbinders,
- Fig. 10a: ein Querschnitt durch eine senkrecht zur Steckachse verlaufende Querschnittsachse von einem Mehrfachsteckverbinder im zusammengesteckten Zustand,
- Fig. 10b: ein vergrößerter Abschnitt des Mehrfachsteckverbinders gemäß Fig. 10a,
- Fig. 11a: eine Explosionsansicht einer vierten Ausführungsform des Dichtelements,
- Fig. 11b: eine Draufsicht auf die vierte Ausführungsform des Dichtelements und
- Fig. 11c: ein Querschnitt durch das Dichtelement gemäß der vierten Ausführungsform durch die Querschnittsachse M-M.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

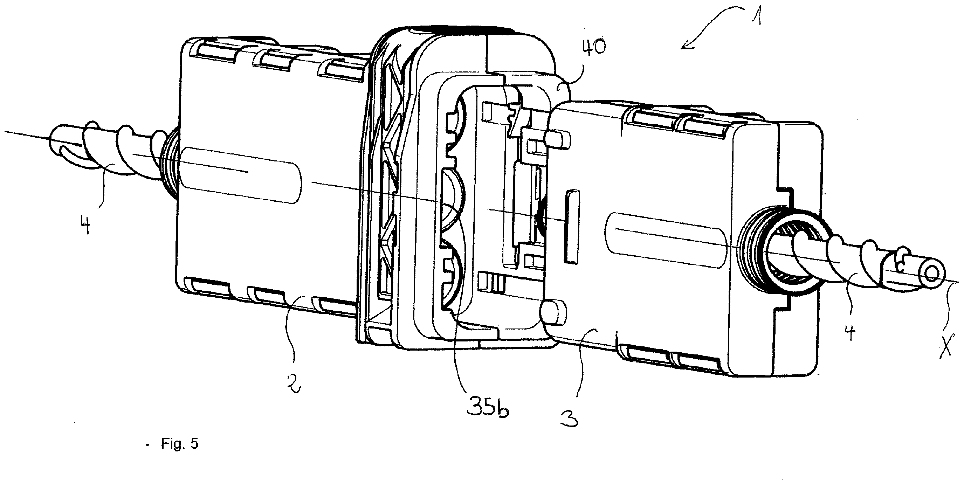

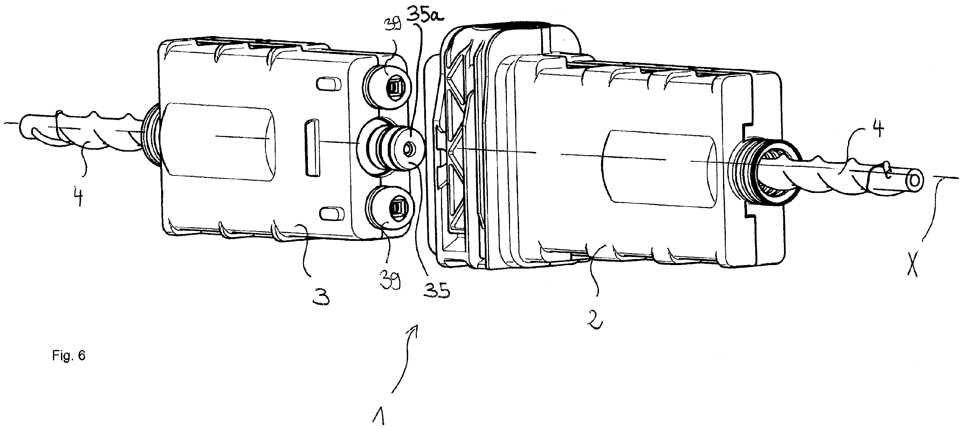

Figuren 5 und 6 zeigen einen erfindungsgemäßen Mehrfachsteckverbinder 1, umfassend ein weibliches und ein männliches Steckerteil 3. Der Mehrfachsteckverbinder 1 dient zum Verbinden von zwei Fluidleitungen und zumindest zwei Elektroleitungen oder Heizleitungen durch einen einzigen Steckvorgang. Besonders bevorzugt ist der Mehrfachsteckverbinder 1 zum Verbinden von vier Elektroleitungen und zwei Fluidleitungen in einem einzigen Steckvorgang geeignet. Der Mehrfachsteckverbinder 1 ist zum Verbinden zweier SCR-Leitungen 4 geeignet, wobei die SCR-Leitungen 4 beheizt sind, und wobei die Elektroleitungen zur Beheizung der SCR-Leitung 4 ebenfalls über den Mehrfachsteckverbinder 1 verbunden werden. Das männliche Steckerteil 3 ist in einer Einsteckrichtung entlang einer Steckachse X in das weibliche Steckerteil 2 einführbar und entlang der Steckachse X von dem weiblichen Steckerteil 2 trennbar.

Jedes Steckerteil 2, 3 besitzt ein Steckergehäuse mit einem Bodenteil 5 und mit einem mit dem Bodenteil 5 verrastbaren Deckelteil 6. Vorzugsweise ist das Deckelteil 6 entlang einer senkrecht zur Steckachse X verlaufenden Montageachse auf das Bodenteil 5 aufsteckbar. In einem Innenraum I des Steckergehäuses, welcher zumindest durch das Bodenteil 5 umschlossen ist, nimmt jedes Steckerteil 2, 3 einen Fluidverbinder 7 auf, der in einem Brillenteil 8 mit zwei Führungskanälen 9 für jeweils eine Elektroleitung aufgenommen ist. Wenn in dem Steckergehäuse alle zuvor genannten Komponenten aufgenommen sind, kann das Steckergehäuse durch Verbinden des Deckelteils 6 mit dem Bodenteil 5 verschlossen werden.

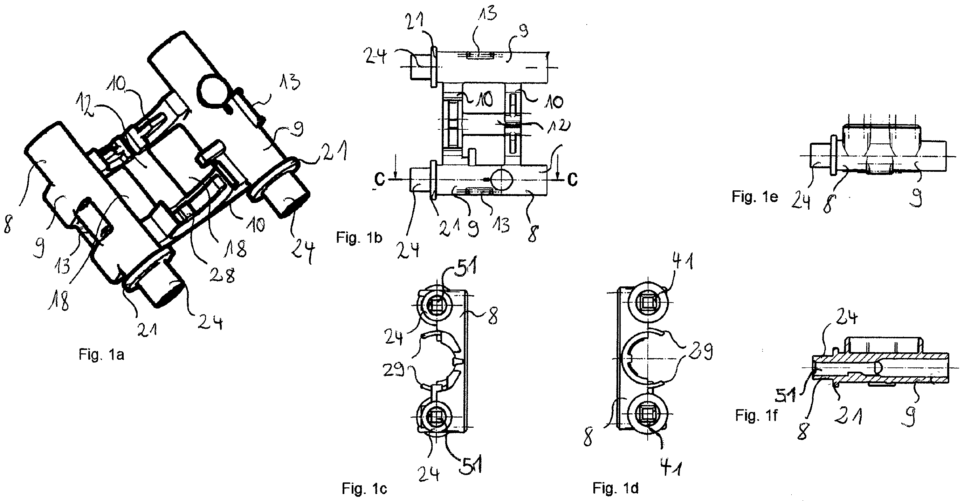

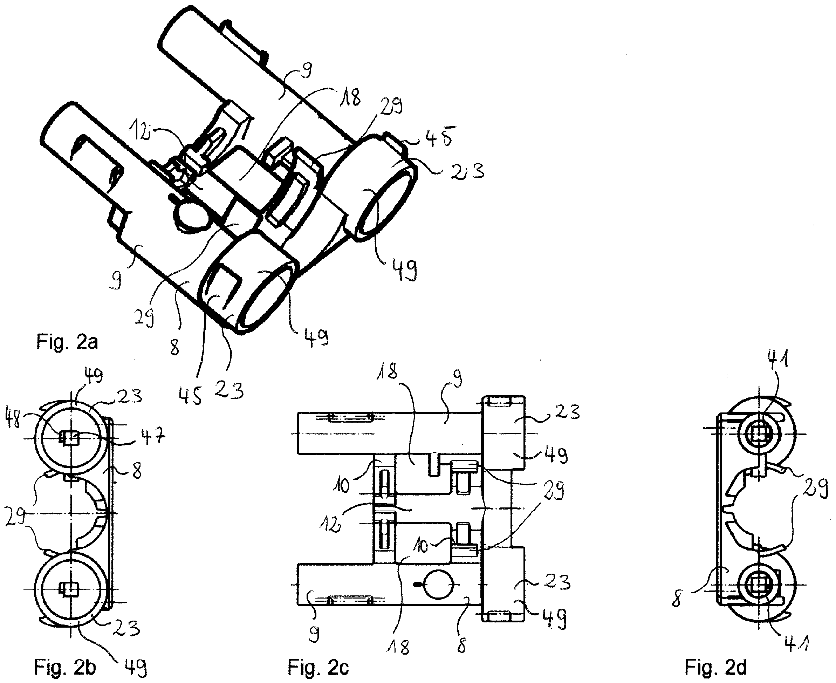

Das Brillenteil 8 besitzt zweirohrförmige, Führungskanäle 9, durch die jeweils eine Elektroleitung mit einer elektrischen Kontaktbuchse eines weiblichen Elektroanschlusses 24 oder einem elektrischen Kontaktstift eines männlichen Elektroanschlusses 23 durchgeführt werden kann, siehe Figuren 1a bis 1f und 2a bis 2d. Zusätzlich können der elektrische Kontaktstift oder die elektrische Kontaktbuchse mit den Führungskanälen 9, vorzugsweise über eine Rastverbindung mit entsprechenden Gegenrastmitteln innerhalb der Führungskanäle 9, verbunden werden. Insbesondere ist vorgesehen, dass im eingebauten Zustand der elektrischen Kontaktbuchse oder des elektrischen Kontaktstiftes sich neben der elektrischen Kontaktbuchse oder dem elektrischen Kontaktstift abschnittsweise ein Fenster 48 in dem Elektroanschluss 23, 24 längs der Steckachse X erstreckt. Das Fenster 48 mündet in eine Einlassöffnung 51 des Elektroanschlusses 23, 24. Das Fenster 48 bildet z. B. einen Hinterschnitt für eine Haltefahne der elektrischen Kontaktbuchse oder des elektrischen Kontaktstiftes. Hierdurch sind die elektrische Kontaktbuchse oder der elektrische Kontaktstift gegen Verschiebungen entlang der Steckachse X in den Führungskanälen 9 des Brillenteils 8 arretiert, insbesondere mit dem Fenster 48 verrastet.

Insbesondere besitzen die Elektroleitungen im Anschluss an den elektrischen Kontaktstift oder die elektrische Kontaktbuchse eine Dichtung (nicht dargestellt), welche innerhalb des Führungskanals 9 flüssigkeitsdicht anliegt.

Die rohrförmigen Führungskanäle 9 erstrecken sich mit ihren Längsachsen entlang, insbesondere parallel zu, der Steckachse X innerhalb des Steckergehäuses des Steckerteils 2, 3. Die Längsachsen eines Körpers, z. B. der Längsachsen der Führungskanäle 9, zeigen stets in die Richtung des Körpers, in dem der Körper die größte Ausdehnung aufweist.

Die Führungskanäle 9 sind zumindest über einen quer, vorzugsweise senkrecht, zur Steckachse X erstreckenden Steg 10 miteinander verbunden. Vorzugsweise sind die, insbesondere rohrförmigen, Führungskanäle 9 über zwei senkrecht zur Steckachse X verlaufende Stege 10 miteinander verbunden. Insbesondere sind die Stege 10 einteilig mit den Führungskanälen 9 ausgebildet.

Zwischen den Stegen 10 sind insbesondere Querstege 12 angeordnet, die sich mit ihren Längsachsen entlang, vorzugsweise parallel zu, der Steckachse X quer zu den Stegen 10 erstrecken. Vorzugsweise sind die Stege 10 einteilig mit den Querstegen 12 ausgebildet. Insbesondere umfasst das Brillenteil 8 zumindest zwei Querstege 12. Besonders bevorzugt erstreckt sich je ein Quersteg 12 mit seiner Längsachse quer zu zwei Enden der Stege 10 und verbindet diese Enden der Stege 10 miteinander (nicht dargestellt). Die Querstege 12, die sich jeweils an den Enden der Stege 10 erstrecken, verlaufen vorzugsweise unterhalb der, insbesondere rohrförmigen, Führungskanäle 9 an einer dem Bodenteil 5 zugewandten Seite. Insbesondere ist mittig zwischen den beiden seitlichen Querstegen 12 ein weiterer Quersteg 12 angeordnet, welcher die Stege 10 miteinander verbindet, siehe Figuren 1a, 1b, 2a und 2c.

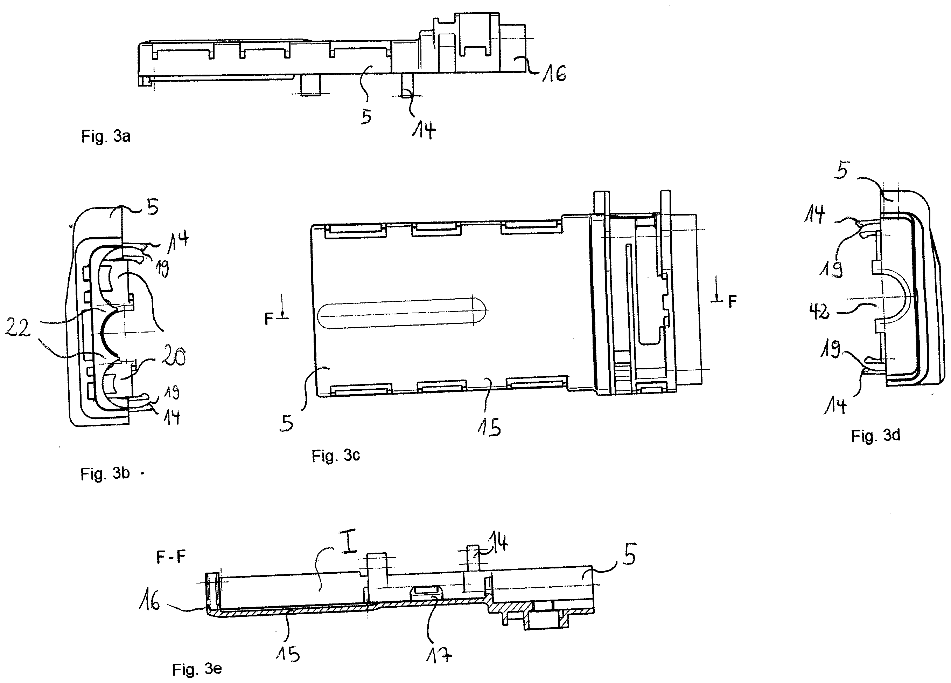

An den Querstegen 12, die jeweils an den Enden der Stege 10 verlaufen, ist vorzugsweise je an einer dem anderen Quersteg 12 abgewandten Seite eine Einkerbung 13 ausgebildet (nicht an den Querstegen 12 dargestellt). Die Einkerbung 13 kann, wie in den Figuren 1a oder 1b dargestellt, sich bis zu den Führungskanälen 9 erstrecken und an ihren Außenwänden verlaufen. Alternativ können die Führungskanäle 9 auch ohne Einkerbung ausgebildet sein, wie z. B. in Fig. 2a dargestellt ist. Die Einkerbung 13 führt vorteilhafterweise beim Einführen des Brillenteils 8 in das Bodenteil 5 das Brillenteil 8 zwischen Laschen 14 des Bodenteils 5 (siehe Figuren 3a, 3d, 3e). In dieser Weise kann das Brillenteil 8 vereinfacht in eine korrekte Montageposition innerhalb des Bodenteils 5 gebracht werden.

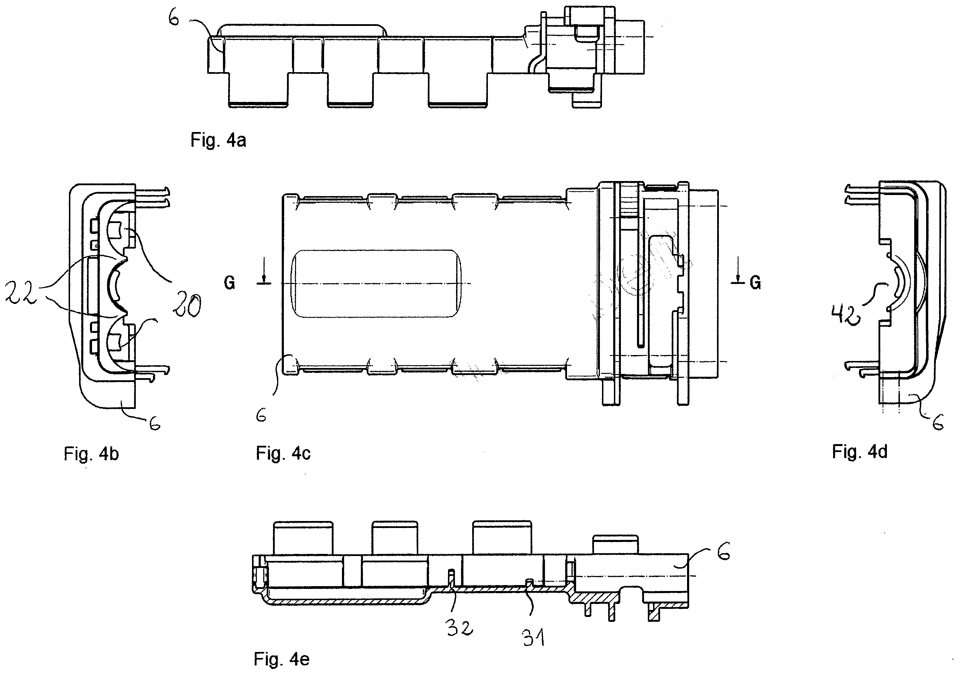

Das Bodenteil 5 des Steckergehäuses umfasst zumindest eine Trägerplatte 15, die sich in einer Ebene entlang der Steckachse X erstreckt, siehe z. B. Figuren 3a bis 3e. Vorzugsweise ist die Trägerplatte 15 von einem durchgehenden Rahmen 16 randseitig umfasst, so dass der Innenraum I zur Aufnahme des Brillenteils 8 und des Fluidverbinders 7 gebildet ist. Der durchgehende Rahmen 16 ist einteilig mit der Trägerplatte 15 ausgebildet. Das Deckelteil 6 kann entsprechend ausgebildet sein, siehe Figuren 4a bis 4e.

Das Bodenteil 5 weist verschiedene Arretierungsmittel zum Arretieren des Brillenteils 8 in seinem Innenraum I auf. Auf der Trägerplatte 15 besitzt das Bodenteil 5, insbesondere rechteckige, Fortsätze 17, die in den Innenraum I des Bodenteils 5 zeigen. Die Fortsätze 17 können in Öffnungen 18 des Brillenteils 8 formschlüssig eingesteckt werden, siehe Figuren 1a, 1b, 2a und 2c. Zudem besitzt das Bodenteil 5 elastische Laschen 14, die seitlich an dem Bodenteil 5 angeformt sind und sich von der Trägerplatte 15 des Bodenteils 5 wegzeigend erstrecken. Zwischen den Laschen 14 kann das Brillenteil 8 eingeklemmt werden. Zu diesem Zweck besitzen die Laschen 14 vorzugsweise an ihren von dem Bodenteil 5 fernliegenden Enden Nocken 19 (siehe Figuren 3b und 3d), welche das Brillenteil 8, insbesondere am Außenumfang der Führungskanäle 9, rastend übergreifen.

Des Weiteren umfasst das Bodenteil 5 Ausnehmungen 20 (siehe Fig. 3b), die radiale bundförmige Vorsprünge 21, siehe Fig. 1a, der Führungskanäle 9 der Elektroleitungen hintergreifen, wobei insbesondere die bundförmigen Vorsprünge 21 am Umfang der Führungskanäle 9, vorzugsweise vollumfänglich an den rohrförmigen Führungskanälen 9, ausgebildet sind. Die Kontur der Ausnehmungen 20 ist insbesondere an die Außenkontur der rohrförmigen Führungskanäle 9 angepasst.

Insbesondere sind zwischen den Ausnehmungen 20 des Bodenteils 5 Zacken 22 ausgebildet (siehe Fig. 3b), an welchen das Brillenteil 8, vorzugsweise mit einem den Vorsprüngen 21 der Führungskanäle 9 nächstliegenden Steg 10, formschlüssig anliegt. Zusammen mit den Ausnehmungen 20 halten die Zacken 22 des Bodenteils 5 das Brillenteil 8 gegen Längsverschiebungen entlang der Steckachse X fest: Das Bodenteil 5 greift mit seinen Zacken 22 zwischen die umfangsgemäßen bundförmigen Vorsprünge 21 der Führungskanäle 9 des Brillenteils 8 und einen Steg 10 des Brillenteils 8. Die Vorsprünge 21 der Führungskanäle 9 liegen vorzugsweise im eingebauten Zustand des Brillenteils 8 an einer Außenwand des Bodenteils 5 und/oder des Deckelteils 6 an.

Die Querstege 12 und Stege 10 sind zueinander beabstandet angeordnet, wobei zwischen ihnen die Öffnungen 18 ausgebildet sind. Sofern das Brillenteil 8 in das Bodenteil 5 eingesetzt wird, greift zumindest ein Fortsatz 17 des Bodenteils 5 formschlüssig in zumindest eine entsprechende Öffnung 18 des Brillenteils 8. In dieser Weise ist das Brillenteil 8 innerhalb des Bodenteils 5 gegen Längsverschiebungen entlang der Steckachse X formschlüssig gehalten (nicht dargestellt).

Die, insbesondere rohrförmigen, Führungskanäle 9 des Brillenteils 8 besitzen jeweils einen Elektroanschluss 23, 24. In dem Bereich des Elektroanschlusses 23, 24 erfolgt beim Zusammenstecken der Steckerteile 2, 3 eine Kontaktierung jeweils eines elektrischen Kontaktstiftes mit jeweils einer elektrischen Kontaktbuchse. Hierbei weist der weibliche Elektroanschluss 24 jeweils eine einzige elektrische Kontaktbuchse und der männliche Elektroanschluss 23 jeweils einen einzigen elektrischen Kontaktstift auf. Bei den weiblichen Elektroanschlüssen 24 (siehe Figuren 1a und 1b) ist insbesondere an den rohrförmigen Führungskanälen 9 voll umfänglich jeweils der radiale bundförmige Vorsprung 21 ausgebildet, welcher außenumfänglich an dem Steckergehäuse des Steckerteils 2, 3 an dem Bodenteil 5 und/oder an dem Deckelteil 6 im Bereich der Ausnehmungen 20 anliegt, wie zuvor beschrieben.

Bei den männlichen Elektroanschlüssen 23 ist ein hohlzylindrischer Aufnahmekörper 49 vorgesehen (siehe z.B. Fig. 2a oder Fig. 2b), in welchem sich die elektrischen Kontaktstifte mit ihren Längsachsen längs der Steckachse X erstrecken. Der hohlzylindrische Aufnahmekörper 49 der männlichen Elektroanschlüsse 23 nimmt den jeweiligen weiblichen Elektroanschluss 24, d. h. auch seine elektrische Kontaktbuchse, in einem zusammengesteckten Zustand der Steckerteile 2, 3 vollumfänglich auf. Zu diesem Zweck ist der Außendurchmesser des weiblichen Elektroanschlusses 24 kleiner als der Innendurchmesser des hohlzylindrischen Aufnahmekörpers 49 des männlichen Elektroanschlusses 23 (siehe z. B. Figuren 1a und 2a).

In das Brillenteil 8 kann der Fluidverbinder 7 eingesetzt werden. Der Fluidverbinder 7 ist vorzugsweise rohrförmig ausgebildet. Insbesondere ist der Fluidverbinder 7 zwischen den beiden, vorzugsweise rohrförmigen, Führungskanälen 9 mit dem Brillenteil 8 kraft- und/oder formschlüssig und/oder stoffschlüssig, z. B. durch ein 2-Komponenten-Spritzgussverfahren, verbindbar, vorzugsweise verrastbar, besonders bevorzugt durch Einklemmen.

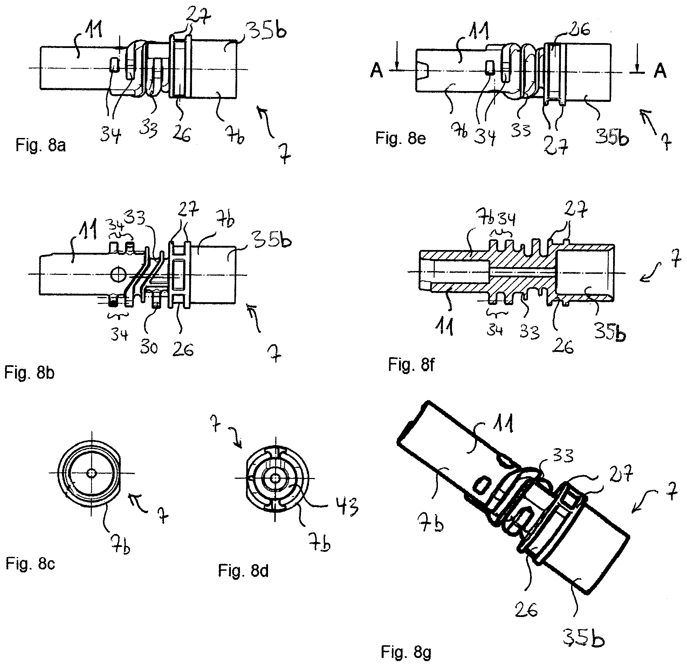

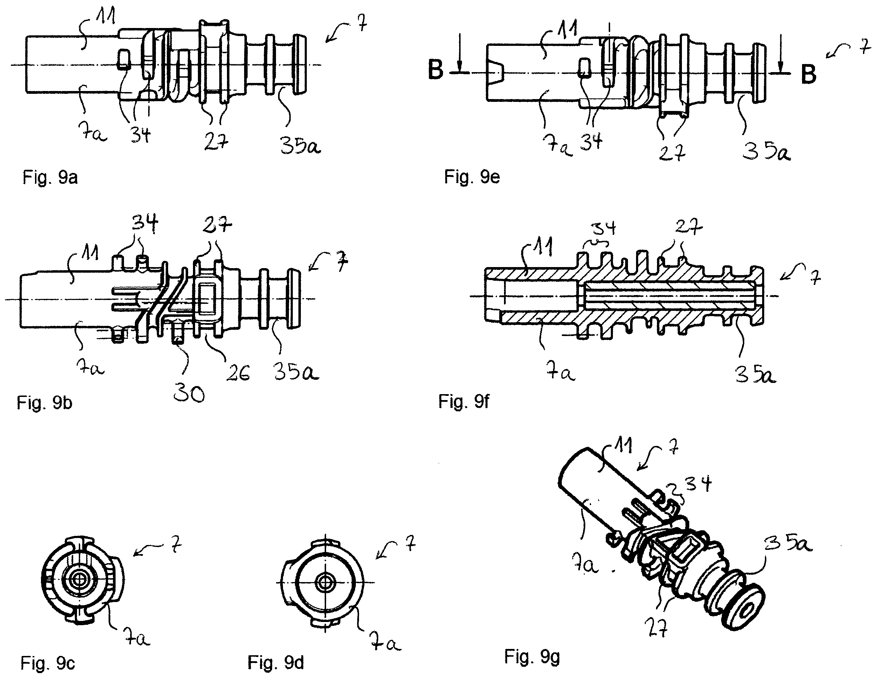

Der Fluidverbinder 7 ist vorzugsweise als ein Zylinder mit einem Kanal ausgebildet (nicht dargestellt), wobei sich der Kanal längs der Steckachse X erstreckt und beidseitig geöffnet ist, siehe Figuren 8a bis 8g sowie 9a bis 9g. Insbesondere weist der Fluidverbinder 7 an einem Ende einen Anschlussstutzen 11 zur Verbindung mit der beheizten Fluidleitung auf, und an einem dem Anschlussstutzen 11 gegenüberliegenden Ende ist insbesondere jeweils ein Fluidanschluss 35, 35a, 35b ausgebildet. Der Fluidverbinder 7 besitzt in einem ersten Abschnitt eine umfängliche Nut 26, die durch zwei vollumfänglich an dem Fluidverbinder 7 ausgebildete Ringstege 27, welche axial nebeneinander verlaufen, gebildet ist. Besonders bevorzugt ist der Fluidverbinder 7 über diese Ringstege 27 mit dem Brillenteil 8 kraft- und/oder formschlüssig verbindbar, vorzugsweise in dem Brillenteil 8 radial einklemmbar.

Wenn der Fluidverbinder 7 in dem Brillenteil 8 montiert ist, nimmt der Fluidverbinder 7 in seiner Vertiefung der umfänglichen Nut 26 einen Ansatz 28 auf, welcher auf einem der Querstege 12, vorzugsweise auf dem mittigen Quersteg 12, des Brillenteils 8 angeformt ist (nicht dargestellt). Hierdurch wird ein Längsverschieben des Fluidverbinders 7 innerhalb des Brillenteils 8 verhindert. Zur kraftschlüssigen und/oder formschlüssigen Verbindung des Fluidverbinders 7 mit dem Brillenteil 8 sind Klemmschenkel 29 vorgesehen (siehe Figuren 1c, 1d 2a bis 2d), welche an dem Brillenteil 8 zwischen den rohrförmigen Fluidkanälen 9 angeformt sind, und welche radial klemmend an den Ringstegen 27 anliegen. Die Klemmschenkel 29 umfassen vorzugsweise den Fluidverbinder 7 an seinem Außenumfang über einen Umfangsbereich größer als 180°.

Der Fluidverbinder 7 ist folglich quer zu der Steckachse X und längs der Steckachse X gegen Bewegungen gesichert.

Der Fluidverbinder 7 ist zusätzlich über das Deckelteil 6, das das Bodenteil 5 verschließt, gegen Kräfte, die quer zur Steckachse X wirken, gegen unerwünschtes Verschieben gesichert.

Insbesondere umfasst das Deckelteil 6 zum Sichern des Fluidverbinders 7 eine Haltenase 31, siehe Fig. 4e, die in den Innenraum I des Steckergehäuses ragt. Die Haltenase 31 ist bei aufgesetztem Deckelteil 6 in der Nut 26 des Fluidverbinders 7 zwischen den Ringstegen 27 angeordnet. Insbesondere greift die Haltenase 31 des Deckelteils 6, vorzugsweise um 180°, an einem Außenumfang des Fluidverbinders 7 radial versetzt in die Nut 26 ein. Damit ist der Fluidverbinder 7 gegen Rotationen um seine eigene Längsachse längs der Steckachse X in dem vollständig zusammengebauten Steckergehäuse gesichert. Entlang der Steckachse X zu der Haltenase 31 versetzt ist vorzugsweise eine erste Halterippe 32 an dem Deckelteil 6 angeordnet, die ebenfalls in den Innenraum I des Steckergehäuses ragt. Die erste Halterippe 32 erstreckt sich bei aufgesetztem Deckelteil 6 quer zu dem Fluidverbinder 7.

Die erste Halterippe 32 ist insbesondere mit ihrer Kontur an die Außenkontur des Fluidverbinders 7 angepasst, so dass die erste Halterippe 32 bei aufgesetztem Deckelteil 6 auf dem Außenumfang des Fluidverbinders 7 aufliegt.

Insbesondere besitzt das Deckelteil 6 korrespondierend zum jeweiligen rohrförmigen Führungskanal 9 zweite Halterippen (nicht dargestellt), welche in ihrer Kontur an die Kontur der Führungskanäle 9 angepasst sind. Diese zweiten Halterippen liegen ebenfalls wie die erste Halterippe 32 des Fluidverbinders 7 bei aufgesetztem Deckelteil 6 auf den Führungskanälen 9 der Elektroleitungen auf. In dieser Weise ist das Brillenteil 8 gegen Verschiebungen quer zur Steckachse X in dem Stecker 2, 3 gehalten.

Die Haltenasen 31 und die Halterippen 32 des Deckelteils 6 üben vorteilhafterweise auf das Brillenteil 8 eine Haltekraft in Richtung auf das Bodenteil 5 aus, so dass das Brillenteil 8 zwischen dem Deckelteil 6 und dem Bodenteil 5 gegen Verkippen um die Steckachse X gesichert ist.

Wie auch das Bodenteil 5 des männlichen Steckerteils 3 besitzt das Deckelteil 6 des männlichen Steckerteils 3 vorzugsweise Ausnehmungen 20 zum Hintergreifen der radialen bundförmigen Vorsprünge 21 der Führungskanäle 9 der Elektroleitungen. Die radialen bundförmigen Vorsprünge 21 wirken hierbei gleichermaßen mit den Ausnehmungen 20 zusammen wie bei dem Bodenteil 5 beschrieben. Bei dem weiblichen Steckerteil 2 kann eine entsprechende Ausbildung oder eine Verrastung des Elektroanschlusses 23, 24 mit dem Steckergehäuse vorgesehen sein. Wie in Fig. 2a für das Brillenteil 8 des weiblichen Steckerteils 2 ersichtlich ist, kann der männliche Elektroanschluss 23 Rastausbuchtungen 45 aufweisen, die mit entsprechend negativ ausgebildeten Rastmitteln des Steckergehäuses zusammenwirken, wodurch das Brillenteil 8 in dem Steckergehäuse gegen Verschiebungen längs der Steckachse X gehalten ist.

Insbesondere ist das Brillenteil 8 im Bereich der Elektroanschlüsse 23, 24 formschlüssig an dem Steckergehäuse, besonders bevorzugt nur an dem Bodenteil 5, gegen Verschiebungen längs der Steckachse X gesichert. Insbesondere ist das Brillenteil 8 umfangsgemäß durch das Bodenteil 5 an seinen männlichen Elektroanschlüssen 23 formschlüssig derart umschlossen, dass es gegen Verschiebungen längs der Steckachse X an dem Bodenteil 5 gesichert ist.

Der Fluidverbinder 7 besitzt vorzugsweise an seinem Außenumfang Konturen 33 zur Führung der Elektroleitungen, wobei die Konturen 33 derart ausgebildet sind, dass die Elektroleitungen zumindest einmal um den Fluidverbinder 7 wickelbar sind, siehe z. B. Figuren 8a, 8b oder 9a und 9b. Axial zu den Konturen 33 versetzt umfasst der Fluidverbinder 7 insbesondere zwei radial, insbesondere um 180° am Außenumfang des Fluidverbinders 7, zueinander versetzte Umlenkfortsätze 34. Die Umlenkfortsätze 34 dienen vorteilhafterweise zur Führung der Elektroleitungen und sind insbesondere derart ausgestaltet, dass die Elektroleitungen an einem gemeinsamen Ende des Fluidverbinders 7 von dem Fluidverbinder 7 wegführbar sind. Weiterhin besitzt ein männlicher Fluidverbinder 7a einen männlichen Fluidanschluss 35a mit einem Steckbereich, auf dem O-Ringe an seinem Außenumfang (siehe Fig. 6) anbringbar sind, wobei der Steckbereich in einen den Steckbereich aufnehmenden weiblichen Aufnahmebereich eines weiblichen Fluidanschlusses 35b eines weiblichen Fluidverbinders 7b einsteckbar ist.

An die Konturen 33 zur Führung der Elektroleitungen schließt sich insbesondere ein schräger Fortsatz 30 an, der zu den Ringstegen 27 axial versetzt ist. Der schräge Fortsatz 30 dient zum Abstützen des Fluidverbinders 7 auf dem Brillenteil 8. Er liegt folglich gemeinsam mit den Ringstegen 27 auf dem Brillenteil 8 auf und stützt somit den Fluidverbinder 7 gemeinsam mit den Ringstegen 27 gegen ein axiales Verkippen längs der Steckachse X. Der schräge Fortsatz 30 ist vorteilhaft beim Zusammenbauen des Steckerteils 2, 3, beispielsweise damit der Fluidverbinder 7 weniger leicht verkippen kann wenn das Deckelteil 6 auf das Bodenteil 5 aufgesetzt wird.

Das Deckelteil 6 und das Bodenteil 5 sind miteinander über Rastmittel verbindbar. Vorzugsweise sind alle Komponenten des Mehrfachsteckverbinders 1 aus Kunststoff hergestellt und vorzugsweise glasfaserverstärkt. Insbesondere sind alle Komponenten des Mehrfachsteckverbinders Spritzgussteile. Beispielsweise können die Komponenten des Mehrfachsteckverbinders aus PPA oder PPT hergestellt sein. Der Fluidverbinder 7 kann aus Metall oder wärmeleitfähigem Kunststoff bestehen. Insbesondere besteht der Fluidverbinder 7 aus zwei Komponenten. Beispielsweise ist der Fluidverbinder 7 über ein 2-Komponenten-Spritzgussverfahren hergestellt. Vorzugsweise ist der Kanal des Fluidverbinders 7 aus einem wärmeleitfähigen Material gebildet. Beispielsweise kann der Fluidverbinder 7 eine Wärmeleithülse aufweisen, die in den Kanal des Fluidverbinders 7 eingelegt ist. Die Wärmeleithülse besteht vorzugsweise aus Metall.

Die Reihenfolge des Aufbaus des Mehrfachsteckverbinders ist wie folgt:
Zunächst wird bei einer an den Fluidverbinder 7 anzuschließenden beheizbaren Fluidleitung (d. h. eine Fluidleitung mit Elektroleitungen oder Heizleitungen), insbesondere SCR-Leitung 4, die als Heizleitung dienende Elektroleitung abgewickelt, die Fluidleitung auf den Fluidverbinder 7 aufgesteckt und/oder je nach Aufbau der Fluidleitung eingesteckt. Danach wird die Fluidleitung mit dem Fluidverbinder 7, insbesondere stoffschlüssig, verbunden, z. B. durch Laserschweißen. Anschließend wird die Elektroleitung auf den Fluidverbinder 7 aufgewickelt. In einem nächsten Schritt werden die elektrischen Kontaktstifte oder Kontaktbuchsen in die Führungskanäle 9 des Brillenteils 8 eingeführt und innerhalb der Führungskanäle 9 mit diesen verbunden, insbesondere innerhalb der Führungskanäle 9 verrastet. Das Verbinden der Elektroleitung mit den elektrischen Kontaktstiften bzw. mit den elektrischen Kontaktbuchsen kann vor oder nach dem Einlegen des Fluidverbinders 7 in das Brillenteil 8 erfolgen. Im Anschluss wird der Fluidverbinder 7 mit dem Brillenteil 8 kraft- und/oder formschlüssig verbunden, insbesondere in das Brillenteil 8 eingerastet. Danach wird das Brillenteil 8 in das Bodenteil 5 eingelegt und insbesondere mit diesem verrastet. Vorzugsweise wird die an den Fluidverbinder 7 angeschlossene Fluidleitung in eine Durchlassöffnung 42 des Bodenteils 5 eingelegt. Zuletzt wird das Deckelteil 6 auf das Bodenteil 5 aufgesetzt und mit diesem verbunden, insbesondere mit diesem verrastet. Das Deckelteil 6 kann eine entsprechende Durchlassöffnung 42 aufweisen, siehe Fig. 4d.

Insbesondere ist für eines der Steckerteile 2, 3, vorzugsweise für das männliche Steckerteil 3, eine Kappe vorgesehen (nicht dargestellt), die die Elektroanschlüsse 23, 24 und den als männlicher Fluidanschluss 35a ausgebildeten Steckbereich oder den Aufnahmebereich des weiblichen Fluidanschlusses 35b des Fluidverbinders 7 schützend umschließt. Insbesondere ist die Kappe mit dem Steckergehäuse lösbar verbindbar, insbesondere verrastbar. Die Kappe kann bei Nichtgebrauch oder bei der Montage eines der Steckerteile 2, 3 in eine größere Einheit, z. B. eine Autokarosserie, den Fluidanschluss 35, 35a, 35b und die Elektroanschlüsse 23, 24 schützend umschließen. Hierdurch sind die Anschlüsse bei Nichtgebrauch vor Schmutz und Feuchtigkeit geschützt.

Insbesondere besitzt die Kappe eine entlang der Steckachse X von dem Steckerteil 2,3 wegzeigende Verjüngung. Die Verjüngung ist vorzugsweise als ein Konus ausgebildet. Vorzugsweise erstreckt sich eine Mantelfläche der konusförmigen Verjüngung mit einem Winkel kleiner als 45 ° zur Steckachse X.

Der erfindungsgemäße Mehrfachsteckverbinder 1 hat den Vorteil, dass Kräfte, die z. B. durch Gefrieren des Fluids innerhalb der verbundenen Fluidverbinder 7a, 7b entstehen, gleichmäßig auf die Komponenten des Mehrfachsteckverbinders 1 verteilt werden. Dabei wird zunächst die zwischen den zusammengesteckten Fluidverbindern 7a, 7b entstandene Kraft auf das Brillenteil 8 und das Deckelteil 6 übertragen, welche wiederum die Kraft auf das Bodenteil 5 übertragen. Ebenfalls wird zwischen den beiden Steckerteilen 2, 3 Kraft übertragen. Insbesondere leiten die Komponenten des Mehrfachsteckverbinders 1 die durch das Fluid bzw. Eis erzeugte Kraft auf einen Haltemechanismus weiter, der zum befestigenden Verrasten der beiden Steckerteile 2, 3 im zusammengesteckten Zustand dient. Der Haltemechanismus kann an den Steckergehäusen der Steckerteile 2, 3 ausgebildet sein.

Da jedes der Einzelteile des Mehrfachsteckverbinders 1 im Rahmen seiner Toleranzen Zug und/oder Druckkräfte kompensieren kann, kann der erfindungsgemäße Mehrfachsteckverbinder 1 gegenüber einem Mehrfachsteckbinder mit einer direkten Kraftübertragung auf den Haltemechanismus größere Drücke kompensieren. Infolgedessen nimmt der erfindungsgemäße Mehrfachsteckverbinder 1 elastisch Verformungskräfte auf, welche z. B. durch Gefrierdruck erzeugt werden. Beispielsweise kann der erfindungsgemäße Mehrfachsteckverbinder 1 eine Volumenausdehnung des Fluids innerhalb des Fluidverbinders 7 von 10 % kompensieren. Abhängig von den Eigenschaften des Fluids kann seine Volumenausdehnung bei einer Temperatur von -10 °C verursacht werden. Gleichfalls ist der erfindungsgemäße Mehrfachsteckverbinder 1 dafür ausgelegt einen Innendruck des Fluids von 150 bar aufzunehmen und durch elastische Verformung, z. B. bedingt durch Kraftübertragung zwischen den einzelnen Komponenten wie zuvor beschrieben, zu kompensieren.

Die weiblichen Elektroanschlüsse 24 erstrecken sich insbesondere an ihrem Außenumfang entlang der Steckachse X zylindrisch. Die elektrischen Kontaktbuchsen sind hierbei insbesondere in den weiblichen Elektroanschlüssen 24 aufgenommen. Bevorzugt sind die weiblichen Elektroanschlüsse 24 an ihrem Außenumfang von Dichtelementen 39 umfasst. Gleichzeitig sind die Dichtelemente 39 Toleranzausgleichselemente. Beispielsweise sind tonnenförmige Dichtringe vorgesehen, die die weiblichen Elektroanschlüsse 24 über ihren Außenumfang umfassen. Insbesondere sind die Dichtelemente 39 kraftschlüssig an dem Außenumfang der weiblichen Elektroanschlüsse 24 befestigt. Die Dichtelemente 39 oder Toleranzausgleichselemente sind vorzugsweise derart ausgestaltet, dass sie zum Überbrücken eines im zusammengesteckten Zustand der Steckerteile 2, 3 zwischen den Elektroanschlüssen 23, 24 bestehenden Spaltes geeignet sind.

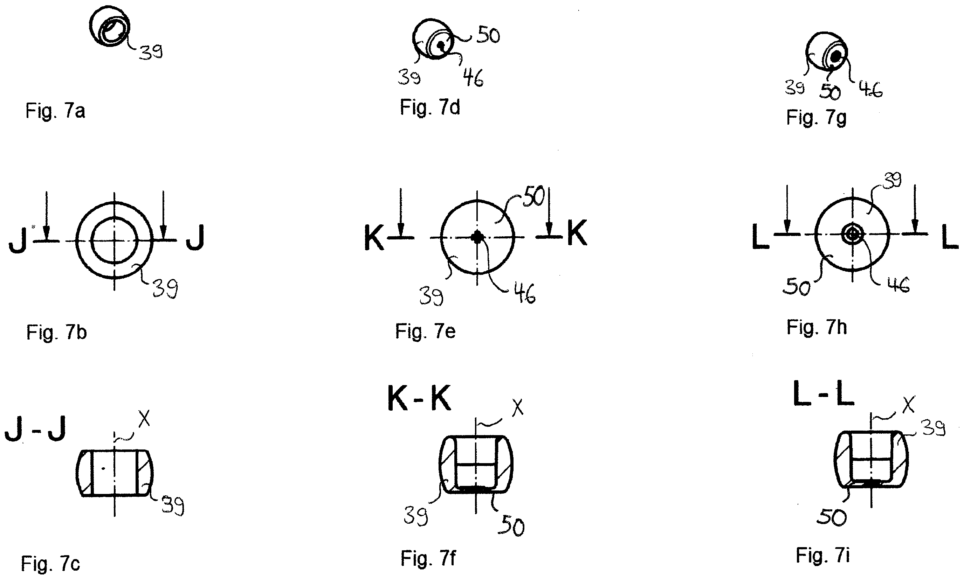

Die Dichtelemente 39 bilden gemäß einer ersten möglichen Ausführungsform einen Torus, siehe Fig. 7a, 7b und 7c. Insbesondere haben die Dichtelemente 39, eine derartige axiale Breite entlang der Steckachse X, dass sie bei einer Anlage an den bundförmigen Vorsprüngen 21 über die den Führungskanälen 9 abgewandten Enden der weiblichen Elektroanschlüsse 24 überstehen, siehe Fig. 6. In dieser Weise werden die Dichtelemente 39 bei einem Zusammenstecken der beiden Steckerteile 2, 3 gestaucht.

Gemäß einer alternativen Ausführungsform ist vorgesehen, dass die Dichtelemente 39 eine Membran aufweisen, die sich vollständig über die Einlassöffnung 51 des weiblichen Elektroanschlusses 24 zum Einführen des elektrischen Kontaktstifts des männlichen Elektroanschlusses 23 erstreckt (nicht dargestellt). Vorzugsweise ist die Membran derart ausgestaltet, dass der elektrische Kontaktstift des männlichen Elektroanschlusses 23 durch die Membran längs der Steckachse X hindurchführbar ist und dass nach einem Herausziehen des elektrischen Kontaktstifts des männlichen Elektroanschlusses 23 die Membran die Einlassöffnung 51 des weiblichen Elektroanschlusses 24 gegen Fluide abdichtet. Hierbei dichtet die Membran insbesondere mindestens derart gegen Fluide ab, dass die elektrischen Kontakte der Elektroanschlüsse 23, 24 sowohl im getrennten als auch im zusammengesteckten Zustand der Steckerteile 2, 3 zumindest vor Spritzwasser geschützt sind. Vorzugsweise ist die Membran einteilig mit dem Dichtelement 39 ausgebildet.

Gemäß einer dritten möglichen Ausführungsform der Dichtelemente 39 besitzen diese eine einseitig geschlossene Fläche 50 (siehe Figuren 7d bis 7i), die sich über eine Einlassöffnung 51 des weiblichen Elektroanschlusses 24 erstreckt, welche zum Einführen eines einzigen elektrischen Kontaktstifts des männlichen Elektroanschlusses 23 vorgesehen ist. Insbesondere besitzt das Dichtelement 39 auf der Fläche ein Loch 46, siehe Fig. 7d bis 7i, dessen Querschnitt senkrecht zur Steckachse X kleiner oder gleich dem Querschnitt der elektrischen Kontaktstifte der männlichen Elektroanschlüsse 23 senkrecht zur Steckachse X ist.

Insbesondere erfolgt die Stauchung des Dichtelements 39 durch eine anpressende Anlage der radialen bundförmigen Vorsprünge 21 der weiblichen Elektroanschlüsse 24 und eine anpressende Anlage an dem jeweiligen männlichen Elektroanschluss 23. Hierbei sind die Dichtelemente 39, vorzugsweise die tonnenförmigen Dichtringe, z. B. ihr Material, derart ausgestaltet, dass die Dichtelemente 39 eine axial zu der Steckachse X wirkende Spannkraft zwischen den beiden Steckerteilen 2, 3 in einem Bereich von 10 N bis 20 N aufnehmen können. Insbesondere erzeugen die Dichtelemente 39, vorzugsweise die tonnenförmigen Dichtringe, eine axial zu der Steckachse X wirkende Gegenspannkraft derart, dass die beiden Steckerteile 2, 3 in ihrem zusammengesteckten Zustand spielfrei miteinander verbunden sind. Dies hat den Vorteil, dass axiale Bewegungen entlang der Steckachse X zwischen den elektrischen Kontaktstiften und den elektrischen Kontaktbuchsen vermieden werden, so dass diese nicht aneinander reiben können. Hierdurch wird das Überspringen von Funken zwischen den elektrischen Kontakten und andere Beschädigungen durch Aufeinanderreiben der Kontakte vermieden. Vorzugsweise sind die Dichtelemente 39, besonders bevorzugt die tonnenförmigen Dichtringe, derart ausgestaltet, dass sie bei einem Fluiddruck von 0,05 bar gegen Fluide abdichten. In dieser Weise sind die elektrischen Kontakte, d. h. die Kontaktstifte und die Kontaktbuchsen, beim Auseinanderziehen der Steckerteile 2, 3 vor Flüssigkeit geschützt, welche aus dem Fluidverbinder 7 tritt.

Vorzugsweise verjüngen sich die Dichtelemente 39, besonders bevorzugt die tonnenförmigen Dichtringe, an ihren sich gegenüberliegenden Endbereichen spiegelsymmetrisch zu einer radialen Achse, die senkrecht zu der Steckachse X ist. Dies hat den Vorteil, dass beim Verpressen der Dichtelemente 39 eine Spaltextrusion vermieden wird.

Die Dichtelemente 39, insbesondere die tonnenförmigen Dichtringe, haben den Vorteil, dass die innerhalb der männlichen Elektroanschlüsse 23 aufgenommenen weiblichen Elektroanschlüsse 24, auch wenn eine durch Gefrieren des Fluids bedingte Kraft die Elektroanschlüsse 23, 24 auseinanderdrückt, stets geschützt eingekammert sind. Somit wird das Eindringen von Flüssigkeit und hierdurch bedingte Funkenbildung vermieden. Eine Verstauchbarkeit der Dichtelemente 39, insbesondere der tonnenförmigen Dichtringe, gewährleistet ebenfalls, dass beim Einstecken des männlichen Steckerteils 3 in das weibliche Steckerteil 2 ein Übersteckweg vorhanden ist, so dass das männliche Steckerteil 3 in das weibliche Steckerteil 2 durch eine Rastverbindung mit Übersteckweg verbindbar ist.

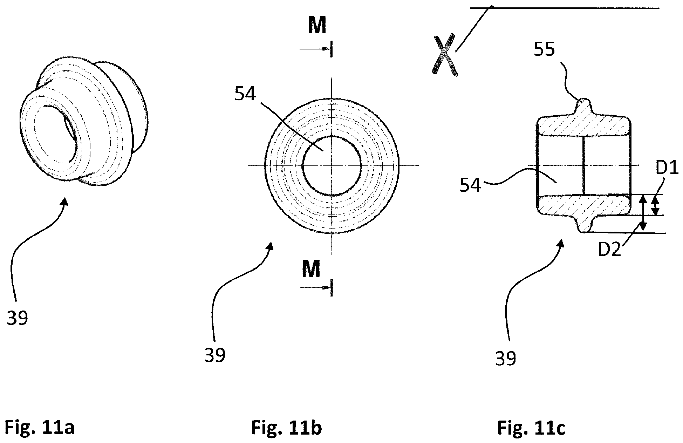

Gemäß einer vierten Ausführungsform des Dichtelements 39, welche in den Figuren 11a bis 11c dargestellt ist, ist das Dichtelement 39 torusförmig ausgebildet, siehe Fig. 11c, und weist eine sich längs der Steckachse X erstreckende Durchgangsöffnung 54 auf. Das Dichtelement 39 weist vorzugsweise an seiner außenumfänglichen der Durchgangsöffnung 54 abgewandten Außenwand einen ringförmigen Ringansatz 55 auf, welcher das Dichtelement 39 umfangsgemäß bezüglich der Steckachse X umschließt. Insbesondere ist der Ringansatz 55 derart ausgestaltet, dass er einen radialen Spalt zwischen dem Brillenteil 8 und dem Dichtelement 39 überbrückt. Somit wird insbesondere ein radialer Spalt zwischen dem Brillenteil 8 und dem Dichtelement 39 sicher abgedichtet. Somit kann das Dichtelement 39 gemäß dieser bevorzugten Ausführungsform radial ohne oder mit geringer axialer Stauchung abdichten sowie axial zur Steckachse X durch eine axiale Stauchung.

Das Dichtelement 39 weist bezüglich der Steckachse X bevorzugt im Bereich des Ringansatzes 55 eine um 2/3 bis 3/4 größere radiale Dicke D2 auf als eine Dicke D1 des Dichtelements 39 in einem Bereich außerhalb des Ringansatzes 55. Insbesondere umfasst der Ringansatz 55 das Dichtelement 39 bezüglich der Steckachse X axial mittig.

Vorzugsweise besitzt das weibliche Steckerteil 2 einen sich axial zur Steckachse X und umfangsgemäß über den Steckbereich 35, 36 des Fluidverbinders 7 und über die elektrischen Elektroanschlüsse 23, 24 erstreckenden Kragen 40 (siehe z. B. Fig. 5). Die Länge, über die sich der Kragen 40 über die Elektroanschlüsse 23, 24 des weiblichen Steckerteils 2 in Richtung der Steckachse X erstreckt, ist z. B. proportional zu der Länge der elektrischen Kontaktstifte der männlichen Elektroanschlüsse 23. Mittels des Kragens 40 ist das männliche Steckerteil 3 in das den Kragen 40 aufweisende weibliche Steckerteil 2 über einen bestimmten Verkippungswinkel zur Steckachse X einführbar. Insbesondere beträgt der Verkippungswinkel bezüglich der Steckachse X maximal 8°, insbesondere maximal 4°. Hierdurch besteht Schiefstecksicherheit für die elektrischen Kontakte, d. h. die elektrischen Kontakte können beim Überführen der beiden Steckerteile 2, 3 in den zusammengesteckten Zustand nicht schief zusammengesteckt werden.

Der Kragen 40 kann an seinem Innenumfang Konturen zur Führung des männlichen Steckerteils 3 beim Einführen des männlichen in das weibliche Steckerteil 2 aufweisen. Hierdurch wird begünstigt, dass das männliche Steckerteil 3 beim Einführen in das weibliche Steckerteil 2 bezüglich der Steckachse X nicht verkippt. Beispielsweise kann das männliche Steckerteil 3 an seinem Außenumfang Führungsnuten aufweisen, welche beim Einführen des männlichen Steckerteils 3 in das weibliche Steckerteil 2 in Führungsstege am Innenumfang des Kragens 40 eingreifen.

Vorzugsweise umfasst das weibliche Steckerteil 2 die männlichen Elektroanschlüsse 23 und das männliche Steckerteil 3 die weiblichen Elektroanschlüsse 24.

Besonders bevorzugt umfasst das weibliche Steckerteil 2 den Aufnahmebereich 36 des weiblichen Fluidverbinders 7b und das männliche Steckerteil 3 den Steckbereich 35 des männlichen Fluidverbinders 7a, der in den Aufnahmebereich 36 des weiblichen Fluidverbinders 7b beim Zusammenstecken der Steckerteile 2, 3 eindringt.

Wenn die Komponenten des Mehrfachsteckverbinders 1 durch ein SpritzgussVerfahren hergestellt werden, ist in den Führungskanälen 9 des Brillenteils 8 die Einlassöffnung 51 größer als die elektrische Kontaktbuchse des weiblichen Elektroanschlusses 24, in den die Kontaktstifte des männlichen Elektroanschlusses 23 einsteckbar sind. Wie beispielsweise in der Fig. 2b dargestellt ist, ist anschließend an einen in die Einlassöffnung 51 mündenden Schacht 47 des Führungskanals 9 zur Durchführung und Verbindung der elektrischen Kontaktbuchse das Fenster 48 angeordnet. Der in die elektrische Kontaktbuchse einzusteckende elektrische Kontaktstift ist vorzugsweise zur elektrischen Kontaktierung mit den Elektroleitungen vercrimpt. Die elektrische Kontaktbuchse kann ebenfalls mit den Elektroleitungen vercrimpt sein. Die elektrischen Kontaktstifte verlaufen insbesondere schräg zur Steckachse X, bevorzugt mit einem maximalen Winkel von 8°, besonders bevorzugt mit einem maximalen Winkel von 4° zur Steckachse X. Die Schiefstellung der elektrischen Kontaktstifte bzw. Kontaktbuchsen resultiert aus ihrer Fertigung, da zwischen den Elektroleitungen und den elektrischen Kontakten sich ein nahezu unverformter Bereich befindet.

Die Möglichkeit einer Fehlsteckung der elektrischen Kontakte, d. h. ein Einstecken des elektrischen Kontaktstiftes in das Fenster 48 seitlich neben der elektrischen Kontaktbuchse, kann reduziert werden, indem beim Überführen der Steckerteile 2, 3 in den zusammengesteckten Zustand bei einem Abstand der beiden Steckerteile 2, 3, bei dem der Kragen 40 des weiblichen Steckerteils 2 die Elektroanschlüsse 23, 24 des männlichen Steckerteils 3 aufnimmt, die elektrischen Kontaktstifte und das Fenster 48 auf einem zylindrischen Umfangsmantel einer mittig durch die elektrische Kontaktbuchse des weiblichen Elektroanschlusses 24, insbesondere mittig durch eine Einlassöffnung 51 der elektrischen Kontaktbuchse, verlaufenden Mittelachse , insbesondere um 180°, radial zueinander versetzt sind (Schiefstecksicherheit). Die elektrischen Kontaktstifte, welche dann bei einem Zusammenstecken nur eine Wandung des jeweiligen weiblichen Elektroanschlusses 24 berühren können, werden dann über diese Wandung in die elektrischen Kontaktbuchsen eingeführt. Entsprechend, z. B. abhängig von der Ausgestaltung der Elektroanschlüsse 23, 24 und/oder der Führungskanäle 9 des Brillenteils 8, können die elektrischen Kontaktstifte im zusammengesteckten Zustand der Steckerteile 2, 3 die elektrischen Kontaktbuchsen mit einer mechanischen Gegenspannung in eine Richtung beaufschlagen, die auf einem Umfangskreis der Steckachse X um 180° zu dem Schacht 47 des weiblichen Elektroanschlusses 24 versetzt liegt.

Die Möglichkeit einer Fehlsteckung der elektrischen Kontakte kann zudem reduziert werden, wenn der Mehrfachsteckverbinder 1 als Poka Yoke-Steckverbinder ausgebildet ist, was bedeutet, dass die Steckerteile 2, 3 nur in einer vorgegebenen Orientierung ineinander steckbar sind. Insbesondere sind im Falle eines Poka Yoke-Steckverbinders an dem Außenumfang des männlichen Steckerteils 3 und an dem Innenumfang des weiblichen Steckerteils 2 sich in ihrer Form entsprechende Führungsnuten 53a, 53b und/oder Führungsrippen 52a, 52b vorgesehen, die beim Einführen des männlichen Steckerteils 3 in das weibliche Steckerteil 2 ersteren in das weibliche Steckerteil 2 führen und eine Verkippung in nur eine Richtung bezüglich der Steckachse X zulassen. Hierbei kann vorgesehen sein, dass die elektrischen Kontaktbuchsen der weiblichen Elektroanschlüsse 24 derart angeordnet sind, dass die elektrischen Kontaktstifte beim Verkippen des männlichen Steckerteils 3 in Richtung der elektrischen Kontaktbuchsen und nicht in einen Bereich der vergrößerten Einlassöffnung 51, d.h. nicht in Richtung der Fenster 48, gelenkt werden.

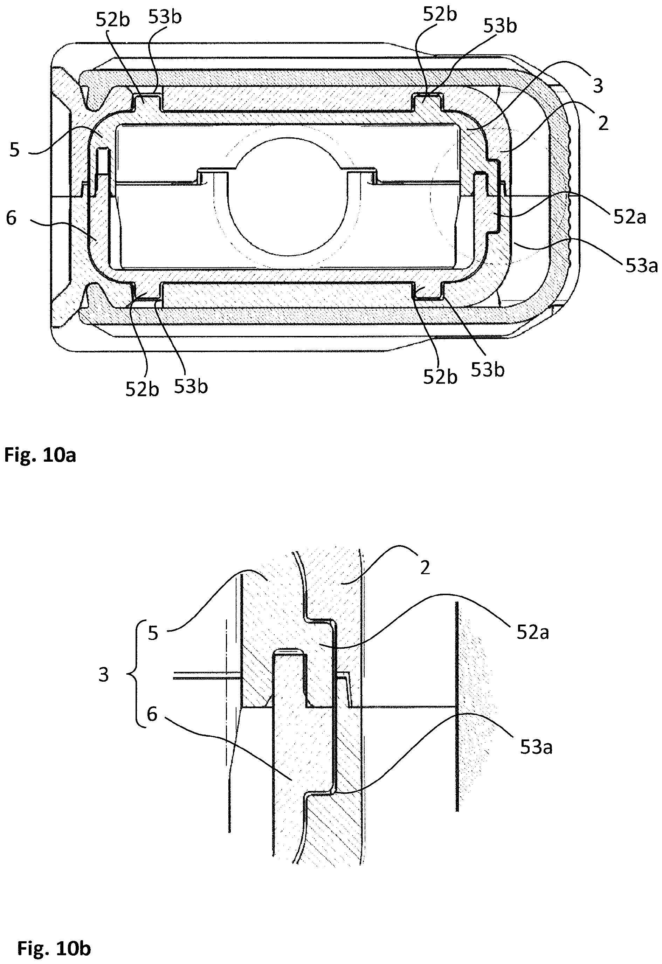

Gemäß einer bevorzugten Ausführungsform eines Poka Yoke-Steckverbinders weisen das männliche und das weibliche Steckerteil 2 eine einzige, sich parallel zur Steckachse X erstreckende erste Führungsrippe 52a und eine einzige entsprechend an die erste Führungsrippe 52a angepasste, sich längs der Steckachse X erstreckende erste Führungsnut 53a auf. Ein mögliches Ausführungsbeispiel ist in den Figuren 10a und 10b dargestellt. Insbesondere ist die erste Führungsrippe 52a am männlichen Steckerteil 3 und die erste Führungsnut 53a am weiblichen Steckerteil 2 ausgebildet. Die erste Führungsrippe 52a und/oder die erste Führungsnut 53a erstrecken sich vorzugsweise entlang eines Verbindungsabschnitts des jeweiligen Steckerteils 2, 3 an welchem das Bodenteil 5 mit dem Deckelteil 6 verbunden ist.

Gemäß dem Ausführungsbeispiel der Fig. 10a sind bevorzugt weitere, zweite Führungsrippen 52b und zweite Führungsnuten 53b an den Steckerteilen 2, 3 ausgebildet. Diese zweiten Führungsrippen 52b und Führungsnuten 53b sind insbesondere umfangsgemäß auf einem Außengehäuse des männlichen Steckerteils 3 und einem Innengehäuse des weiblichen Steckerteils 2 gleich zueinander beabstandet verteilt und spiegelsymmetrisch bezüglich einer durch die Steckachse X verlaufenden Ebene angeordnet. Die zweiten Führungsrippen 52b und Führungsnuten 53b bevorzugen eine Führung der Steckerteile 2, 3 beim Zusammenstecken ohne ein Verkippen.

Zusammenfassend ist klarzustellen, dass zuvor beschriebene Merkmale des Mehrfachsteckverbinders 1, die lediglich für eines der beiden Steckerteile 2, 3, entweder im Zusammenhang mit dem weiblichen Steckerteil 2 oder im Zusammenhang mit dem männlichen Steckerteil 3 beschrieben wurden, bei dem jeweils gegennamigen Steckerteil 2, 3 gleich ausgebildet sein können.

Weiterhin bezieht sich die vorliegende Erfindung darauf, dass der Mehrfachsteckverbinder 1 in einem Halter befestigt ist. Dieser Halter besitzt eine oder mehrere innere Kontur/en, die der äußeren Kontur des Mehrfachsteckverbinders 1 angepasst ist/sind, und/oder Haltemittel für den Mehrfachsteckverbinder 1. Hierdurch wird eine Fixierung und eine erhöhte Sicherheit gegen Eisdruck bewirkt. Weiterhin kann oder können die im Halter vorhandene innere Kontur oder inneren Konturen derart gestaltet sein, dass ein Öffnen einer vorhandenen Halteklammer im eingelegten Zustand des Mehrfachsteckverbinders 1 im Halter unmöglich ist.

### Bezugszeichenliste

- 1: Mehrfachsteckverbinder
- 2: weibliches Steckerteil
- 3: männliches Steckerteil
- 4: SCR-Leitung
- 5: Bodenteil
- 6: Deckelteil
- 7: Fluidverbinder
- 7a: männlicher Fluidverbinder
- 7b: weiblicher Fluidverbinder
- 8: Brillenteil
- 9: Führungskanal
- 10: Steg
- 11: Anschlussstutzen
- 12: Quersteg
- 13: Einkerbung
- 14: Lasche
- 15: Trägerplatte
- 16: Rahmen
- 17: Fortsatz
- 18: Öffnung
- 19: Nocke
- 20: Ausnehmung
- 21: bundförmiger radialer Vorsprung
- 22: Zacke
- 23: männlicher Elektroanschluss
- 24: weiblicher Elektroanschluss
- 26: Nut
- 27: Ringsteg
- 28: Ansatz
- 29: Klemmschenkel
- 30: schräger Fortsatz
- 31: Haltenase
- 32: erste Halterippe
- 33: Konturen
- 34: Umlenkfortsatz
- 35: Fluidanschluss
- 35a: männlicher Fluidanschluss
- 35b: weiblicher Fluidanschluss
- 39: Dichtelement
- 40: Kragen des weiblichen Steckerteils
- 41: Einführöffnung
- 42: Durchführöffnung
- 43: Anschlussöffnung
- 45: Rastausbuchtung
- 46: Loch
- 47: Schacht
- 48: Fenster
- 49: hohlzylindrischer Aufnahmekörper
- 50: Fläche
- 51: Einlassöffnung
- 52a: erste Führungsrippe
- 52b: zweite Führungsrippe
- 53a: erste Führungsnut
- 53b: zweite Führungsnut
- 54: Durchgangsöffnung
- 55: Ringansatz

- D1: radiale Dicke des Dichtelements
- D2: radiale Dicke des Dichtelements im Bereich des Ringansatzes
- I: Innenraum
- X: Steckachse

## Patentansprüche

1. Mehrfachsteckverbinder (1) zum Verbinden von zwei beheizten Fluidleitungen und zumindest zwei Elektroleitungen über einen einzigen Steckvorgang, aufweisend ein weibliches Steckerteil (2), das mit einem männlichen Steckerteil (3) entlang einer Steckachse (X) lösbar in einem zusammengesteckten Zustand der Steckerteile (2, 3) verbunden ist, wobei jedes Steckerteil (2, 3) einen Fluidanschluss (35, 35a, 35b) und zwei Elektroanschlüsse (23, 24) aufweist, wobei jedes Steckerteil (2, 3) ein zweiteiliges Steckergehäuse aus einem Bodenteil (5) und einem Deckelteil (6) aufweist, die miteinander verbindbar sind und einen Innenraum (I)
umschließen, in welchem ein Brillenteil (8) aufgenommen ist, wobei das Brillenteil (8) zwei sich entlang der Steckachse (X) erstreckende, rohrförmige Führungskanäle (9) zur Aufnahme von Elektroleitungen einschließlich den mit ihren Enden verbundenen, als Kontaktstifte oder als Kontaktbuchsen ausgebildeten Elektroanschlüssen (23, 24) aufweist, und die rohrförmigen Führungskanäle (9) über zumindest einen Steg (10) miteinander verbunden sind, wobei der Steg (10) mit einem in den Innenraum (I) ragenden Rastmittel des Bodenteils (5) kraft- und/oder formschlüssig derart verbunden ist, dass das Brillenteil (8) an dem Bodenteil (5) gegen Verschiebungen entlang und/oder quer zu der Steckachse (X) gesichert ist, wobei das Brillenteil (8) einen, rohrförmigen Fluidverbinder (7, 7a, 7b) aufnimmt, welcher mit dem Brillenteil (8) gegen Verschiebungen längs der Steckachse (X) kraftschlüssig und/oder formschlüssig verbunden ist, wobei der Fluidverbinder (7, 7a, 7b) an einem Ende einen Anschlussstutzen (11) zur Verbindung mit der beheizten Fluidleitung aufweist und an einem dem Anschlussstutzen (11) gegenüberliegenden Ende der jeweilige Fluidanschluss (35, 35a, 35b) ausgebildet ist.

2. Mehrfachsteckverbinder (1) nach Anspruch 1,
**dadurch gekennzeichnet, dass** das Brillenteil (8) im Bereich der Elektroanschlüsse (23, 24) formschlüssig an dem Bodenteil (5) und/oder an dem Deckelteil (6) gegen Verschiebungen längs der Steckachse (X) gesichert ist.

3. Mehrfachsteckverbinder (1) nach Anspruch 1 oder 2,
**dadurch gekennzeichnet, dass** das Brillenteil (8) an seinen Führungskanälen (9) im Bereich des Elektroanschlusses (23, 24) jeweils einen um seinen Umfang herum ausgebildeten bundförmigen Vorsprung (21) aufweist, der an einer Außenwand des Bodenteils (5) und/oder des Deckelteils (6) anliegt.

4. Mehrfachsteckverbinder (1) nach einem der Ansprüche 1 bis 3,
**dadurch gekennzeichnet, dass** eines der Steckerteile (2, 3) einen sich umfangsgemäß axial zu der Steckachse (X) über den Fluidanschluss (35, 35a, 35b) und die Elektroanschlüsse (23, 24) erstreckenden Kragen (40) besitzt und mittels des Kragens (40) das andere Steckerteil (2, 3) in das den Kragen (40) aufweisende Steckerteil (2, 3) über einen vorgegebenen Verkippungswinkel von maximal 8°, insbesondere von maximal 4°, zur Steckachse (X) einführbar ist.

5. Mehrfachsteckverbinder (1) nach Anspruch 3 oder 4,
**dadurch gekennzeichnet, dass** eines der Steckerteile (2, 3) zwei weibliche Elektroanschlüsse (24) mit jeweils einer sich entlang der Steckachse (X) erstreckenden elektrischen Kontaktbuchse aufweist, die im zusammengesteckten Zustand der beiden Steckerteile (2, 3) jeweils einen elektrischen Kontaktstift eines männlichen Elektroanschlusses (23) des anderen Steckerteils (2, 3) aufnimmt.

6. Mehrfachsteckverbinder (1) nach Anspruch 5,
**dadurch gekennzeichnet, dass** der männliche Elektroanschluss (23) einen hohlzylindrischen Aufnahmekörper (49) aufweist, welcher im zusammengesteckten Zustand der Steckerteile (2, 3) die elektrische Kontaktbuchse des weiblichen Elektroanschlusses (24) vollständig aufnimmt.

7. Mehrfachsteckverbinder (1) nach Anspruch 5 oder 6,
**dadurch gekennzeichnet, dass** der elektrische Kontaktstift des männlichen Elektroanschlusses (23) bezüglich der Steckachse (X) einen spitzen Winkel in einem Bereich von 1° bis 4° einschließt.

8. Mehrfachsteckverbinder (1) nach einem der Ansprüche 5 bis 7,
**dadurch gekennzeichnet, dass** ein Fenster (48) an der elektrischen Kontaktbuchse und der elektrische Kontaktstift beim Zusammenführen der Steckerteile (2, 3) derart zueinander angeordnet sind, dass bei konstruktionsbedingt schiefer Ausrichtung der elektrischen Kontaktstifte zu den elektrischen Kontaktbuchsen in einem Bereich von 4° bis 8° bezüglich der Steckachse (X) eine Schiefstecksicherheit der elektrischen Kontakte gewährleistet ist.

9. Mehrfachsteckverbinder (1) nach Anspruch 8,
**dadurch gekennzeichnet, dass** beim Überführen der Steckerteile (2, 3) in den zusammengesteckten Zustand bei einem Abstand der beiden Steckerteile (2, 3), bei dem der Kragen (40) des weiblichen Steckerteils (2) die Elektroanschlüsse (23, 24) des männlichen Steckerteils (3) aufnimmt, jedes Fenster (48) der elektrischen Kontaktbuchse des weiblichen Elektroanschlusses (24) auf einem zylindrischen Umfangsmantel einer mittig durch die elektrische Kontaktbuchse des weiblichen Elektroanschlusses (24) verlaufenden Mittelachse, insbesondere mittig durch eine Einlassöffnung (51) der elektrischen Kontaktbuchse (24) zum Einführen des elektrischen Kontaktstiftes des männlichen Elektroanschlusses (23) verlaufenden Mittelachse, insbesondere um 180°, radial versetzt zu dem in die elektrische Kontaktbuchse einzuführenden elektrischen Kontaktstift des männlichen Steckerteils (3) angeordnet ist,

10. Mehrfachsteckverbinder (1) nach einem der Ansprüche 5 bis 9,
**dadurch gekennzeichnet, dass** der weibliche Elektroanschluss (24) an seinem Außenumfang von einem Dichtelement (39), insbesondere von einem tonnenförmigen Dichtring, umfasst ist, wobei das Dichtelement (39) kraftschlüssig und/oder formschlüssig an dem Außenumfang des weiblichen Elektroanschlusses (24) befestigt ist.

11. Mehrfachsteckverbinder (1) nach Anspruch 10,
**dadurch gekennzeichnet, dass** das Dichtelement (39) längs der Steckachse (X) eine derartige axiale Breite aufweist, dass es bei einer Anlage an dem bundförmigen Vorsprung (21) axial zur Steckachse (X) über die elektrische Kontaktbuchse des weiblichen Elektroanschlusses (24) übersteht und das Dichtelement (39) im zusammengesteckten Zustand der Steckerteile (2, 3) mit einer längs der Steckachse (X) wirkenden axialen Spannkraft an dem bundförmigen Vorsprung (21) des weiblichen Elektroanschlusses (24) und an dem jeweiligen männlichen Elektroanschluss (23) anliegt.

12. Mehrfachsteckverbinder (1) nach Anspruch 10 oder 11,
**dadurch gekennzeichnet, dass** das Dichtelement (39) derart ausgestaltet ist, dass es eine axiale Spannkraft längs der Steckachse (X) zwischen den beiden Steckerteilen (2, 3) in einem Bereich von 10 N bis 20 N aufnimmt.

13. Mehrfachsteckverbinder (1) nach einem der Ansprüche 10 bis 12,
**dadurch gekennzeichnet, dass** das Dichtelement (39) eine längs der Steckachse (X) wirkende axiale Gegenspannkraft derart erzeugt, dass die beiden Steckerteile (2, 3) in ihrem zusammengesteckten Zustand spielfrei miteinander verbunden sind.

14. Mehrfachsteckverbinder (1) nach einem der Ansprüche 10 bis 13,
**dadurch gekennzeichnet, dass** das Dichtelement (39) sich entlang der Steckachse (X) hohlzylinderförmig erstreckt, wobei ein Mantel des hohlzylinderförmigen Dichtelements (39) in seiner axialen Mitte eine maximale Dicke aufweist.

15. Mehrfachsteckverbinder (1) nach einem der Ansprüche 10 bis 13,
**dadurch gekennzeichnet, dass** das Dichtelement (39) torusförmig ausgebildet ist.

16. Mehrfachsteckverbinder (1) nach einem der Ansprüche 10 bis 15,
**dadurch gekennzeichnet, dass** das Dichtelement (39) eine Membran aufweist, die sich vollständig über eine Einlassöffnung (51) des weiblichen Elektroanschlusses (24) zum Einführen des elektrischen Kontaktstifts des männlichen Elektroanschlusses (23) erstreckt, wobei die Membran derart ausgestaltet ist, dass der elektrische Kontaktstift des männlichen Elektroanschlusses (23) durch die Membran längs der Steckachse (X) hindurchführbar ist und dass nach einem Herausziehen des elektrischen Kontaktstifts des männlichen Elektroanschlusses (23) die Membran die Einlassöffnung (51) des weiblichen Elektroanschlusses (24) gegen Fluide abdichtet.

17. Mehrfachsteckverbinder (1) nach einem der Ansprüche 10 bis 15,
**dadurch gekennzeichnet, dass** das Dichtelement (39) eine einseitig bis auf ein Loch (46) zum Durchführen des elektrischen Kontaktstiftes des männlichen Elektroanschlusses (23) geschlossene Fläche (50) aufweist, die sich über eine Einlassöffnung (51) des weiblichen Elektroanschlusses (24) zum Einführen des elektrischen Kontaktstifts des männlichen Elektroanschlusses (23) erstreckt, wobei der Querschnitt des Lochs (46) senkrecht zur Steckachse (X) kleiner oder gleich dem Querschnitt des elektrischen Kontaktstiftes des männlichen Elektroanschlusses (23) ist.

18. Mehrfachsteckverbinder (1) nach einem der Ansprüche 10 bis 17,
**dadurch gekennzeichnet, dass** das Dichtelement (39) derart ausgestaltet ist, dass es im zusammengesteckten Zustand der Steckerteile (2, 3) bei einem Fluiddruck von 0,05 bar flüssigkeitsdicht an dem radialen bundförmigen Vorsprung (21) des weiblichen Elektroanschlusses (24) und an dem männlichen Elektroanschluss (23), insbesondere an einem Stirnbereich innerhalb des hohlzylindrischen Aufnahmekörpers (49) des männlichen Elektroanschlusses (23), anliegt.

19. Mehrfachsteckverbinder (1) nach einem der Ansprüche 10 bis 18,
**dadurch gekennzeichnet, dass** das Dichtelement (39) an seiner Außenwand einen ringförmigen Ringansatz (55) aufweist, welcher das Dichtelement (39) vollumfänglich bezüglich der Steckachse (X) umschließt, wobei der Ringansatz (55) derart ausgestaltet ist, dass er einen radialen Spalt zwischen dem Brillenteil (8) und dem Dichtelement (39) überbrückt.

20. Mehrfachsteckverbinder (1) nach einem der Ansprüche 1 bis 19,
**dadurch gekennzeichnet, dass** der Fluidverbinder (7, 7a,7b) derart ausgestaltet ist, dass er im zusammengesteckten Zustand der beiden Steckerteile (2, 3) eine zwischen den Steckerteilen (2, 3) durch Fluiddruck oder Eisdruck erzeugte Kraft auf das Brillenteil (8) und das Deckelteil (6) überträgt, wobei das Brillenteil (8) und das Deckelteil (6) derart ausgestaltet sind, dass sie die Kraft auf das Bodenteil (5) übertragen.

21. Mehrfachsteckverbinder (1) nach einem der Ansprüche 1 bis 20,
**dadurch gekennzeichnet, dass** der Fluidverbinder (7, 7a, 7b), das Brillenteil (8), das Deckelteil (6) und das Bodenteil (5) jedes Steckerteils (2, 3) derart ausgestaltet sind, dass sie eine durch Fluiddruck oder Eisdruck erzeugte Kraft auf einen Haltemechanismus zum befestigenden Verrasten des weiblichen und mit dem männlichen Steckerteil (2, 3) in ihrem zusammengesteckten Zustand übertragen.

22. Mehrfachsteckverbinder (1) nach einem der Ansprüche 1 bis 21,
**dadurch gekennzeichnet, dass** der Fluidverbinder (7, 7a, 7b), das Brillenteil (8), das Deckelteil (6) und das Bodenteil (5) jedes Steckerteils (2, 3) jeweils im zusammengesteckten Zustand der Steckerteile (2, 3) derart ausgestaltet sind, dass sie eine Volumenausdehnung des Fluids innerhalb des Fluidverbinders (7, 7a, 7b) in einem Bereich von 8 % bis 15 %, insbesondere von 10 %, kompensieren und/oder einen Innendruck des Fluids in einem Bereich von 100 bar bis 200 bar, insbesondere von 150 bar, kompensieren.

23. Mehrfachsteckverbinder (1) nach einem der Ansprüche 1 bis 22,
**dadurch gekennzeichnet, dass** die Führungskanäle (9) über zwei sich senkrecht zur Steckachse (X) erstreckende Stege (10) miteinander verbunden sind, wobei ein sich längs der Steckachse (X) erstreckender Quersteg (12) die beiden Stege (10), vorzugsweise mittig zwischen den beiden Führungskanälen (9), miteinander derart verbindet, dass zwischen dem Quersteg (12) und den Führungskanälen (9) beidseitig des Querstegs (12) zwei Öffnungen (18) am Brillenteil (8) ausgebildet sind, wobei zwei Fortsätze (17) des Bodenteils (5) formschlüssig in die Öffnungen (18) eingreifen.

24. Mehrfachsteckverbinder (1) nach einem der Ansprüche 1 bis 23,
**dadurch gekennzeichnet, dass** der Führungskanal (9) im Bereich seines Elektroanschlusses (23, 24) an dem Bodenteil (5) und/oder an dem Deckelteil (6) formschlüssig gegen Verschiebungen längs der Steckachse (X) gesichert ist.

25. Mehrfachsteckverbinder (1) nach einem der Ansprüche 1 bis 24,
**dadurch gekennzeichnet, dass** der Fluidverbinder (7, 7a, 7b) in einer an seinem Außenumfang ausgebildeten Vertiefung einen Ansatz (28) des Brillenteils (8) aufnimmt und/oder an seinem Außenumfang eine Haltenase (31) des Deckelteils (6) aufnimmt, die, vorzugsweise um 180°, an einem Außenumfang des Fluidverbinders (7) zu einer Vertiefung des Fluidverbinders (7, 7a, 7b) radial versetzt, in eine Nut (26) des Fluidverbinders (7, 7a, 7b) eingreift.

26. Mehrfachsteckverbinder (1) nach einem der Ansprüche 1 bis 25,
**dadurch gekennzeichnet, dass** der Fluidverbinder (7, 7a, 7b) über umfangsgemäß den Fluidverbinder (7, 7a, 7b) um einen Umfangswinkel größer/gleich 180° umgreifende Klemmschenkel (29) des Brillenteils (8) kraftschlüssig gegen Längsverschiebungen entlang der Steckachse (X) an dem Brillenteil (8) gehalten ist.

27. Mehrfachsteckverbinder (1) nach einem der Ansprüche 1 bis 26,
**dadurch gekennzeichnet, dass** eines der Steckerteile (2, 3) eine einzige, sich parallel zur Steckachse (X) erstreckende erste Führungsrippe (52a) und das andere Steckerteil (2, 3) eine einzige entsprechend an die erste Führungsrippe (52a) angepasste, sich längs der Steckachse X erstreckende erste Führungsnut (53a) aufweist.

28. Mehrfachsteckverbinder (1) nach Anspruch 27, **dadurch gekennzeichnet, dass** die erste Führungsrippe (52a) und/oder die erste Führungsnut (53a) sich entlang eines Verbindungsabschnitts des jeweiligen Steckerteils (2, 3) erstrecken, an welchem das Bodenteil (5) mit dem Deckelteil (6) verbunden ist.

## Claims

1. Multi-line plug connector (1) for connecting two heated fluid lines and at least two electrical lines by way of a single connecting operation, including a female plug component (2) which is connected with a male plug component (3) which can be decoupled along a coupling axis (X) when the plug components (2,3) are in their connected state, whereby each plug component (2, 3) includes a fluid connection (35, 35a, 35b) and two electrical connections (23, 24). wherein each plug component (2,3) includes a two-part plug housing made up of a base component (5) and a cover component (6) which can be connected to one another and enclose an inner space (I), in which a spectacle component (8) is contained, wherein the spectacle component (8) includes two guide channels (9), tubular in shape and extending along the coupling axis (X) for the purpose of accepting electrical lines and the electrical connectors (23, 24), formed as contact pin or contact socket, on their ends, and the guide channels (9), tubular in shape, are connected with one another by way of at least one bridge (10), wherein the bridge (10) is connected to a latching mechanism of the base component (5) protruding into the inner space (I) by friction-fit and/or form-fit, so that the spectacle component (8) is secured on the base component (5) against displacement along and/or crosswise to the coupling axis (X),
wherein the spectacle component (8) incorporates a fluid connector (7, 7a, 7b), tubular in shape, which is connected with the spectacle component (8) by friction-fit and/or form-fit to prevent displacement along the coupling axis (X), wherein the fluid connector (7, 7a, 7b) includes a connecting component (11) on one end for connection to the heated fluid line, and the respective fluid connection (35, 35a, 35b) is formed on the end opposite the connecting component (11).

2. Multi-line plug connector (1) according to claim 1,
**characterized in that** the spectacle component (8) is secured to the base component (5) and/or the cover component (6) with form-fit in the area of the electrical connections (23, 24) to protect against displacement along the coupling axis (X).

3. Multi-line plug connector (1) according to claim 1 or 2,
**characterized in that** the spectacle component (8) includes a collar-shaped projection (21) on each of its guide channels (9) in the area of the electrical connection (23, 24), which lies on an outer wall of the base component (5) and/or the cover component (6).

4. Multi-line plug connector (1) according to one of the claims 1 to 3,
**characterized in that** one of the plug components (2, 3) has a collar (40) which extends circumferentially axially to the coupling axis (X) over the fluid connection (35, 35a, 35b) and the electrical connections (23, 24) and using the collar (40) the other plug component (2, 3) can be inserted into the plug component (2, 3) including the collar with a predetermined angle of inclination of no more than 8°, especially no more than 4°, to the coupling axis (X).

5. Multi-line plug connector (1) according to claim 3 or 4,
**characterized in that** one of the plug components (2, 3) includes two female electrical connections (24) each with an electrical contact socket extending along the coupling axis (X), which in the connected state of both plug components (2, 3) each receive an electrical contact pin of a male electrical connection (23) of the other plug component (2, 3).

6. Multi-line plug connector (1) according to claim 5,
**characterized in that** the male electrical connection (23) includes a hollow cylindrical receiving body (49) which completely receives the electrical contact socket of the female electrical connection (24) when the plug components (2, 3) are in their connected state.

7. Multi-line plug connector (1) according to claim 5 or 6,
**characterized in that** the electrical contact pin of the male electrical connection (23) encloses an acute angle in a range of 1° to 4° in relation to the coupling axis (X).

8. Multi-line plug connector (1) according to one of the claims 5 to 7,
**characterized in that** a window (48) located at the electrical contact socket and the electrical contact pin upon joining the plug components (2, 3) are located to each other such that in the event of an inclined position of the electrical contact pins in relation to the electrical contact socket resulting from the manufacturing process in a range of 4° to 8° in relation to the coupling axis (X), secure mating of the electrical contacts is ensured.

9. Multi-line plug connector (1) according to claim 8,
**characterized in that** when joining the plug components (2, 3) in their connected state with separation between the two plug components (2, 3), wherein the collar (40) of the female plug component (2) receives the electrical connections (23, 24) of the male plug component (3), each window (48) of the electrical contact socket of the female electrical connection (24) is radially offset to the electrical contact pins of the male plug component (3) to be inserted into the electrical contact socket on a cylindrical circumferential jacket in relation to a central axis running through the middle of the electrical contact socket of the female electrical connection (24), especially through a central axis running through the middle of an inlet opening (51) of the electrical contact socket (24) for insertion of the electrical contact pin of the male electrical connection (23), particularly at 180°.

10. Multi-line plug connector (1) according to one of the claims 5 to 9,
**characterized in that** the female electrical connection (24) is surrounded by a sealing element (39) on its outer circumference, particularly by a barrel-shaped sealing ring, whereby the sealing element (39) is affixed to the outer circumference of the female electrical connection (24) by friction-fit and/or form-fit.

11. Multi-line plug connector (1) according to claim 10,
**characterized in that** the sealing element (39) exhibits a width along the coupling axis (X) such that it protrudes axially to the coupling axis over the electrical contact socket of the female electrical connection (24) when lying against the collar-shaped protrusion (21), and the sealing element (39) lies in contact with the collar-shaped protrusion (21) of the female electrical connection (24) and the respective male electrical connection (23) with a clamping force acting axially long the coupling axis (X) when the plug components (2, 3) are in their connected state.

12. Multi-line plug connector (1) according to claim 10 or 11,
**characterized in that** the sealing element (39) is formed in such a way that it absorbs axial tension along the coupling axis (X) between the two plug components (2, 3) in a range of 10 N to 20 N.

13. Multi-line plug connector (1) according to one of the claims 10 to 12,
**characterized in that** the sealing element (39) creates an opposing axial tension along the coupling axis (X) such that the two plug components (2, 3) are connected to one another without play in their connected state.

14. Multi-line plug connector (1) according to one of the claims 10 to 13,
**characterized in that** the sealing element (39) extends along the coupling axis (X) in a hollow cylindrical shape, wherein a jacket of the hollow cylindrical sealing element (39) exhibits maximum thickness in its axial center.

15. Multi-line plug connector (1) according to one of the claims 10 to 13,
**characterized in that** the sealing element (39) is toroidal in shape.

16. Multi-line plug connector (1) according to one of the claims 10 to 15,
**characterized in that** the sealing element (39) includes a diaphragm which stretches completely over the inlet opening (51) of the female electrical connection (24) for coupling with the electrical contact pin of the male electrical connection (23), whereby the diaphragm is designed in such a way that the electrical contact pin of the male electrical connection (23) can be pushed through the diaphragm along the coupling axis (X) and that after removing the electrical contact pin of the male electrical connection (23), the diaphragm seals the inlet opening (51) of the female electrical connection (24) against fluids.

17. Multi-line plug connector (1) according to one of the claims 10 to 15, **characterized in that** the sealing element (39) includes a surface which is closed on one side up to a hole (46) for feeding the electrical contact pin of the male electrical connection (23) through, which extends over an inlet opening (51) of the female electrical connection (24) for inserting the electrical contact pin of the male electrical connection (23), whereby the cross-section of the hole (46) perpendicular to the coupling axis (X) is smaller than or equal to the cross-section of the electrical contact pin of the male electrical connection (23).

18. Multi-line plug connector (1) according to one of the claims 10 to 17, **characterized in that** the sealing element (39) is formed in such a way that it contacts the radial collar-shaped projection (21) of the female electrical connection (24) and the male electrical connection (23), especially on a front area of the hollow cylindrical receiving body (49) of the male electrical connection (23) to be fluid-tight at a fluid pressure of 0.05 bar when the plug components (2, 3) are in their connected state.

19. Multi-line plug connector (1) according to one of the claims 10 to 18, **characterized in that** the sealing element (39) includes a ring-shaped annular projection (55) on its outer surface, which surrounds the sealing element (39) along its whole circumference with respect to the coupling axis (X), whereby the annular projection (55) is designed in such a way that it bridges a radial gap between the spectacle component (8) and the sealing element (39).

20. Multi-line plug connector (1) according to one of the claims 1 to 19,
**characterized in that** the fluid connector (7, 7a, 7b) is formed in such a way that it transfers forces generated between the plug components (2, 3) by fluid pressure or ice pressure to the spectacle component (8) and the cover component (6) when the plug components (2, 3) are in their connected state, whereby the spectacle component (8) and the cover component (6) are formed in such a way that they transfer the force to the base component (5).

21. Multi-line plug connector (1) according to one of the claims 1 to 20,
**characterized in that** the fluid connector (7, 7a, 7b), the spectacle component (8), the cover component (6), and the base component (5) of each plug component (2, 3) are formed in such a way that they transfer forces generated by fluid pressure or ice pressure to a retaining mechanism for latching of the female plug component and the male plug component (2, 3) in their connected state.

22. Multi-line plug connector (1) according to one of the claims 1 to 21,
**characterized in that** the fluid connector (7, 7a, 7b), the spectacle component (8), the cover component (6), and the base component (5) of each plug component (2, 3) in the plug components' (2, 3) connected position are each formed in such a way that they compensate for a volume expansion of the fluid within the fluid connector (7, 7a, 7b) in a range between 8% and 15%, especially of 10%, and/or compensate for an interior pressure of the fluid in a range between 100 bar to 200 bar, especially of 150 bar.

23. Multi-line plug connector (1) according to one of the claims 1 to 22,
**characterized in that** the guide channels (9) are connected with one another by two bridges (10) running parallel to the coupling axis (X), whereby a cross-bar (12) which stretches along the coupling axis (X) connects the two bridges (10) with one another, preferably centrally between the two guide channels (9), in such a way that two openings (18) are formed on the spectacle component (8) between the cross-bar (12) and the guide channels (9) on both sides of the cross-bar (12), whereby two protrusions (17) of the base component (5) engage in the openings (18) with a form-fit.

24. Multi-line plug connector (1) according to one of the claims 1 to 23,
**characterized in that** the guide channel (9) is secured to the base component (5) and/or the cover component (6) with form-fit in the area of its electrical connection (23, 24) to protect against displacement along the coupling axis (X).

25. Multi-line plug connector (1) according to one of the claims 1 to 24,
**characterized in that** the fluid connector (7, 7a, 7b) receives a projection (28) of the spectacle component (8) in an indentation formed on its outer circumference and/or receives a retaining collar (31) of the cover component (6) on its outer circumference, which engages with a groove (26) of the fluid connector (7, 7a, 7b) in a radially offset position on an outer circumference of the fluid connector (7) in relation to an indentation of the fluid connector (7, 7a, 7b), preferably offset by 180°.

26. Multi-line plug connector (1) according to one of the claims 1 to 25,
**characterized in that** the fluid connector (7, 7a, 7b) is secured on the spectacle component (8) against longitudinal displacement along the coupling axis (X) by a clamping arm (29) on the spectacle component (8) which wraps circumferentially around the fluid connector (7, 7a, 7b) with a circumferential angle greater than / equal to 180°.

27. Multi-line plug connector (1) according to one of the claims 1 to 26,
**characterized in that** one of the plug components (2, 3) includes a single first guide rib (52a) which extends parallel to the coupling axis (X) and the other plug component (2, 3) includes a single first guide groove (53a) which corresponds to the first guide rib (52a) and extends along the coupling axis X.

28. Multi-line plug connector (1) according to claim 27,
**characterized in that** the first guide rib (52a) and/or the first guide groove (53a) run along a connecting section of the respective plug component (2, 3), on which the base component (5) is connected with the cover component (6).

## Revendications

1. Connecteur à enfichage multiple (1) destiné à relier deux conduites à fluide chauffées et au moins deux lignes électriques par le biais d'une opération d'enfichage unique, comprenant une partie de fiche femelle (2) qui est reliée de manière amovible à une partie de fiche mâle (3) le long d'un axe d'enfichage (X) dans un état assemblé par enfichage des parties de fiche (2, 3), chaque partie de fiche (2, 3) possédant un raccord à fluide (35, 35a, 35b) et deux raccords électriques (23, 24), chaque partie de fiche (2, 3) possédant un boîtier de fiche en deux parties constitué d'une partie de fond (5) et d'une partie de couvercle (6) qui peuvent être reliées l'une à l'autre et entourent un espace intérieur (I) dans lequel est accueilli une partie formant lunette (8), la partie formant lunette (8) possédant deux canaux de guidage (9) tubulaires, qui s'étendent le long de l'axe d'enfichage (X), destinés à accueillir des lignes électriques, y compris les raccords électriques (23, 24) reliés à leurs extrémités, réalisés sous la forme de broches de contact ou sous la forme de douilles de contact, et les canaux de guidage (9) tubulaires étant reliés l'un à l'autre par le biais d'au moins un pont (10), le pont (10) étant relié par assemblage de force et/ou par complémentarité de formes avec un moyen d'enclipsage de la partie de fond (5) faisant saillie dans l'espace intérieur (I) de telle sorte que la partie formant lunette (8) est bloquée contre la partie de fond (5) contre les déplacements le long de et/ou transversalement à l'axe d'enfichage (X), la partie formant lunette (8) accueillant un connecteur à fluide (7, 7a, 7b) qui est relié à la partie formant lunette (8) par assemblage de force et/ou par complémentarité de forme afin d'empêcher un déplacement le long de l'axe d'enfichage (X), le connecteur à fluide (7, 7a, 7b) possédant à une extrémité un manchon de raccordement (11) destiné à la liaison avec la conduite à fluide chauffée et étant formé à une extrémité opposée au manchon de raccordement (11) du raccord à fluide (35, 35a, 35b) respectif.

2. Connecteur à enfichage multiple (1) selon la revendication 1,
**caractérisé en ce que** la partie formant lunette (8), dans la zone des raccords électriques (23, 24), est bloquée par complémentarité de formes contre la partie de fond (5) et/ou contre la partie de couvercle (6) contre les déplacements le long de l'axe d'enfichage (X).

3. Connecteur à enfichage multiple (1) selon la revendication 1 ou 2,
**caractérisé en ce que** la partie formant lunette (8) au niveau de ses canaux de guidage (9) dans la zone du raccord électrique (23, 24), possède respectivement une partie saillante (21) en forme d'épaulement formé autour de son pourtour, laquelle repose contre une paroi extérieure de la partie de fond (5) et/ou de la partie de couvercle (6).

4. Connecteur à enfichage multiple (1) selon l'une des revendications 1 à 3,
**caractérisé en ce que** l'une des parties de fiche (2, 3) possède une collerette (40) qui s'étend sur le pourtour dans le sens axial par rapport à l'axe d'enfichage (X) sur le raccord à fluide (35, 35a, 35b) et les raccords électriques (23, 24) et, au moyen de la collerette (40), l'autre partie de fiche (2, 3) peut être introduite dans la partie de fiche (2, 3) qui possède la collerette (40) sous un angle de désalignement prédéfini maximal de 8°, notamment maximal de 4° par rapport à l'axe d'enfichage (X).

5. Connecteur à enfichage multiple (1) selon la revendication 3 ou 4,
**caractérisé en ce que** l'une des parties de fiche (2, 3) possède deux raccords électriques femelles (24) comprenant respectivement une douille de contact électrique qui s'étend le long de l'axe d'enfichage (X) et qui, à l'état assemblé par enfichage des deux parties de fiche (2, 3), accueille respectivement une broche de contact électrique d'un raccord électrique mâle (23) de l'autre partie de fiche (2, 3).

6. Connecteur à enfichage multiple (1) selon la revendication 5,
**caractérisé en ce que** le raccord électrique mâle (23) possède un corps d'accueil (49) cylindrique creux qui, à l'état assemblé par enfichage des deux parties de fiche (2, 3), accueille entièrement la broche de contact électrique du raccord électrique femelle (24).

7. Connecteur à enfichage multiple (1) selon la revendication 5 ou 6,
**caractérisé en ce que** la broche de contact électrique du raccord électrique mâle (23) forme par rapport à l'axe d'enfichage (X) un angle aigu dans une plage de 1° à 4°.

8. Connecteur à enfichage multiple (1) selon l'une des revendications 5 à 7, **caractérisé en ce qu'**une fenêtre (48) au niveau de la douille de contact électrique et la broche de contact électrique sont disposées l'une par rapport à l'autre lors de la réunion des parties de fiche (2, 3) de telle sorte que dans le cas d'une orientation gauchie liée à la construction des broches de contact électrique par rapport aux douilles de contact électrique dans une plage de 4° à 8° par rapport à l'axe d'enfichage (X), une sécurité d'enfichage gauchi des contacts électriques est garantie.

9. Connecteur à enfichage multiple (1) selon la revendication 8,
**caractérisé en ce que** lors du transfert des parties de fiche (2, 3) dans l'état assemblé par enfichage avec un écart entre les deux parties de fiche (2, 3) avec lequel la collerette (40) de la partie de fiche femelle (2) accueille les raccords électriques (23, 24) de la partie de fiche mâle (3), chaque fenêtre (48) de la douille de contact électrique du raccord électrique femelle (24) est disposée sur une enveloppe périphérique cylindrique d'un axe central qui suit un tracé central à travers la douille de contact électrique du raccord électrique femelle (24), notamment un axe central qui suit un tracé central à travers une ouverture d'entrée (51) du raccord électrique femelle (24) servant à l'introduction de la broche de contact électrique du raccord électrique mâle (23), notamment décalé de 180° dans le sens radial par rapport à la broche de contact électrique de la partie de fiche mâle (3) à introduire dans la douille de contact électrique.

10. Connecteur à enfichage multiple (1) selon l'une des revendications 5 à 9, **caractérisé en ce que** le raccord électrique femelle (24) est entouré au niveau de son pourtour extérieur par un élément d'étanchéité (39), notamment par une bague d'étanchéité en forme de barillet, l'élément d'étanchéité (39) étant fixé par assemblage de force et/ou par complémentarité de formes au niveau du pourtour extérieur du raccord électrique femelle (24).

11. Connecteur à enfichage multiple (1) selon la revendication 10,
**caractérisé en ce que** l'élément d'étanchéité (39) possède le long de l'axe d'enfichage (X) une largeur axiale de telle sorte que lors d'un appui contre la partie saillante (21) en forme d'épaulement, il fait saillie dans le sens axial par rapport à l'axe d'enfichage (X) au-dessus de la douille de contact électrique du raccord électrique femelle (24) et l'élément d'étanchéité (39), dans l'état assemblé par enfichage des parties de fiche (2, 3), repose avec une force de serrage axiale agissant le long de l'axe d'enfichage (X) contre la partie saillante (21) en forme d'épaulement du raccord électrique femelle (24) et contre le raccord électrique mâle (23) respectif.

12. Connecteur à enfichage multiple (1) selon la revendication 10 ou 11, **caractérisé en ce que** l'élément d'étanchéité (39) est configuré de telle sorte qu'il absorbe une force de serrage axiale agissant le long de l'axe d'enfichage (X) entre les deux parties de fiche (2, 3) dans une plage de 10 N à 20 N.

13. Connecteur à enfichage multiple (1) selon l'une des revendications 10 à 12, **caractérisé en ce que** l'élément d'étanchéité (39) génère une contre-force de serrage axiale agissant le long de l'axe d'enfichage (X) de telle sorte que les deux parties de fiche (2, 3), dans leur état assemblé par enfichage, sont reliées l'une à l'autre sens jeu.

14. Connecteur à enfichage multiple (1) selon l'une des revendications 10 à 13, **caractérisé en ce que** l'élément d'étanchéité (39) s'étend en forme de cylindre creux le long de l'axe d'enfichage (X), une enveloppe de l'élément d'étanchéité (39) en forme de cylindre creux présentant une épaisseur maximale dans son centre axial.

15. Connecteur à enfichage multiple (1) selon l'une des revendications 10 à 13, **caractérisé en ce que** l'élément d'étanchéité (39) est de configuration torique.

16. Connecteur à enfichage multiple (1) selon l'une des revendications 10 à 15, **caractérisé en ce que** l'élément d'étanchéité (39) possède une membrane qui s'étend entièrement sur une ouverture d'entrée (51) du raccord électrique femelle (24) destinée à l'introduction de la broche de contact électrique du raccord électrique mâle (23), la membrane étant configurée de telle sorte que la broche de contact électrique du raccord électrique mâle (23) peut être passée à travers la membrane le long de l'axe d'enfichage (X) et qu'après une extraction de la broche de contact électrique du raccord électrique mâle (23), la membrane ferme l'ouverture d'entrée (51) du raccord électrique femelle (24) de manière étanche aux fluides.

17. Connecteur à enfichage multiple (1) selon l'une des revendications 10 à 15, **caractérisé en ce que** l'élément d'étanchéité (39) possède une surface (50) fermée unilatérale, à l'exception d'un trou (46) servant au passage de la broche de contact électrique du raccord électrique mâle (23), laquelle s'étend sur une ouverture d'entrée (51) du raccord électrique femelle (24) destinée à l'introduction de la broche de contact électrique du raccord électrique mâle (23), la section transversale du trou (46) perpendiculairement à l'axe d'enfichage (X) étant inférieure ou égale à la section transversale de la broche de contact électrique du raccord électrique mâle (23).

18. Connecteur à enfichage multiple (1) selon l'une des revendications 10 à 17, **caractérisé en ce que** l'élément d'étanchéité (39) est configuré de telle sorte que dans l'état assemblé par enfichage des parties de fiche (2, 3) avec une pression de fluide de 0,05 bar, il repose de manière étanche aux fluides contre la partie saillante (21) en forme d'épaulement du raccord électrique femelle (24) et contre le raccord électrique mâle (23), notamment au niveau d'une zone frontale à l'intérieur du corps d'accueil (49) cylindrique creux du raccord électrique mâle (23).

19. Connecteur à enfichage multiple (1) selon l'une des revendications 10 à 18, **caractérisé en ce que** l'élément d'étanchéité (39) possède sur sa paroi extérieure un rebord annulaire (55) en forme d'anneau qui entoure entièrement l'élément d'étanchéité (39) par rapport à l'axe d'enfichage (X), le rebord annulaire (55) étant configuré de telle sorte qu'il ponte un interstice radial entre la partie formant lunette (8) et l'élément d'étanchéité (39).

20. Connecteur à enfichage multiple (1) selon l'une des revendications 1 à 19, **caractérisé en ce que** le connecteur à fluide (7, 7a, 7b) est configuré de telle sorte que dans l'état assemblé par enfichage des parties de fiche (2, 3), il transmet entre les parties de fiche (2, 3) une force générée par la pression de fluide ou la pression de glace sur la partie formant lunette (8) et la partie de couvercle (6), la partie formant lunette (8) et la partie de couvercle (6) étant configurées de telle sorte qu'elles transmettent la force sur la partie de fond (5).

21. Connecteur à enfichage multiple (1) selon l'une des revendications 1 à 20, **caractérisé en ce que** le connecteur à fluide (7, 7a, 7b), la partie formant lunette (8), la partie de couvercle (6) et la partie de fond (5) de chaque partie de fiche (2, 3) sont configurés de telle sorte qu'ils transmettent une force générée par la pression de fluide ou la pression de glace sur un mécanisme de maintien destiné à l'enclipsage consolidé de la partie de fiche (2, 3) femelle avec la mâle dans leur état assemblé par enfichage.

22. Connecteur à enfichage multiple (1) selon l'une des revendications 1 à 21, **caractérisé en ce que** le connecteur à fluide (7, 7a, 7b), la partie formant lunette (8), la partie de couvercle (6) et la partie de fond (5) de chaque partie de fiche (2, 3), respectivement dans l'état assemblé par enfichage des parties de fiche (2, 3), sont configurés de telle sorte qu'ils compensent une dilatation du volume du fluide à l'intérieur du connecteur à fluide (7, 7a, 7b) dans une plage de 8 % à 15 %, notamment de 10 %, et/ou une pression interne du fluide dans une plage de 100 bars à 200 bars, notamment de 150 bars.

23. Connecteur à enfichage multiple (1) selon l'une des revendications 1 à 22, **caractérisé en ce que** les canaux de guidage (9) sont reliés l'un à l'autre par le biais de deux ponts (10) qui s'étendent perpendiculairement à l'axe d'enfichage (X), un pont transversal (12) qui s'étend le long de l'axe d'enfichage (X) reliant les deux ponts (10) l'un à l'autre, de préférence au centre entre les deux canaux de guidage (9), de telle sorte que deux ouvertures (18) sont formées au niveau de la partie formant lunette (8) entre le pont transversal (12) et les canaux de guidage (9) des deux côtés du pont transversal (12), deux prolongements (17) de la partie de fond (5) venant en prise par complémentarité de formes dans les ouvertures (18).

24. Connecteur à enfichage multiple (1) selon l'une des revendications 1 à 23, **caractérisé en ce que** le canal de guidage (9) est bloqué par complémentarité de formes dans la zone de son raccord électrique (23, 24) au niveau de la partie de fond (5) et/ou au niveau de la partie couvercle (6) contre les déplacements le long de l'axe d'enfichage (X).

25. Connecteur à enfichage multiple (1) selon l'une des revendications 1 à 24, **caractérisé en ce que** le connecteur à fluide (7, 7a, 7b) accueille dans une empreinte formée au niveau de son pourtour extérieur un talon (28) de la partie formant lunette (8) et/ou accueille au niveau de son pourtour extérieur un tenon de maintien (31) de la partie de couvercle (6), qui vient en prise dans une rainure (26) du connecteur à fluide (7, 7a, 7b), de préférence décalé dans le sens radial de 180° au niveau d'un pourtour extérieur du connecteur à fluide (7) par rapport à une empreinte du connecteur à fluide (7, 7a, 7b).

26. Connecteur à enfichage multiple (1) selon l'une des revendications 1 à 25, **caractérisé en ce que** le connecteur à fluide (7, 7a, 7b) est maintenu au niveau de la partie formant lunette (8) par des branches de serrage (29) de la partie formant lunette (8), entourant le connecteur à fluide (7, 7a, 7b) sur le pourtour sur un angle circonférentiel supérieur/égal à 180°, par assemblage de force contre les déplacements longitudinaux le long de l'axe d'enfichage (X).

27. Connecteur à enfichage multiple (1) selon l'une des revendications 1 à 26, **caractérisé en ce que** l'une des parties de fiche (2, 3) possède une première nervure de guidage (52a) unique qui s'étend parallèlement à l'axe d'enfichage (X) et l'autre partie de fiche (2, 3) possède une première rainure de guidage (53a) unique, adaptée en conséquence à la première nervure de guidage (52a), qui s'étend le long de l'axe d'enfichage (X).

28. Connecteur à enfichage multiple (1) selon la revendication 27,
**caractérisé en ce que** la première nervure de guidage (52a) et/ou la première rainure de guidage (53a) s'étendent le long d'une portion de liaison de la partie de fiche (2, 3) respective au niveau de laquelle la partie de fond (5) est reliée à la partie couvercle (6).
